# EUROPEAN PATENT SPECIFICATION

(11) **EP 1 979 427 B1**
(45) Date of publication and mention of the grant of the patent: **13.07.2011**
(21) Application number: 07763323.8
(22) Date of filing: 10.01.2007
(51) Int. Cl.: C09D 183/04, C08K 7/06, C07F 17/02

(54) **SILICONE RESIN FILM, METHOD OF PREPARING SAME, AND NANOMATERIAL-FILLED SILICONE COMPOSITION**
SILIKONHARZFILM, HERSTELLUNGSVERFAHREN DAFÜR UND MIT NANOMATERIAL GEFÜLLTE SILIKONZUSAMMENSETZUNG
FILM EN RESINE DE SILICONE, SON PROCEDE DE PREPARATION ET COMPOSITION DE SILICONE CHARGEE DE NANOMATERIAUX

(30) Priority: 02.02.2006 US 764502 P
(43) Date of publication of application: 15.10.2008
(73) Proprietor: Dow Corning Corporation, Midland, Michigan 48686-0994 (US)
(72) Inventor: FISHER, Mark, Midland, MI 48642 (US); ZHU, Bizhong, Midland, MI 48640 (US)
(74) Representative: Gillard, Richard Edward
(86) International application number: PCT/US2007/000631
(87) International publication number: WO 2007/092118

(56) References cited:
- EP-A1- 1 065 248
- EP-A2- 0 358 452
- EP-A2- 1 050 538
- WO-A-03/078079
- US-A- 6 046 283

## Description

### FIELD OF THE INVENTION

The present invention relates to a method of preparing a silicone resin film and more particularly to a method comprising coating a release liner with a nanomaterial-filled silicone composition comprising (i) a hydrosilylation-curable silicone composition comprising a silicone resin and a photoactivated hydrosilylation catalyst and (ii) a carbon nanomaterial; and exposing the coating to radiation having a wavelength of from 150 to 800 nm at a dosage sufficient to cure the silicone resin. The present invention also relates to a silicone resin film prepared according to the preceding method, and to a nanomaterial-filled silicone composition.

### BACKGROUND OF THE INVENTION

Silicone resins are useful in a variety of applications by virtue of their unique combination of properties, including high thermal stability, good moisture resistance, excellent flexibility, high oxygen resistance, low dielectric constant, and high transparency. For example, silicone resins are widely used as protective or dielectric coatings in the automotive, electronic, construction, appliance, and aerospace industries.

Although silicone resin coatings can be used to protect, insulate, or bond a variety of substrates, free standing silicone resin films have limited utility due to low tear strength, high brittleness, low glass transition temperature, and high coefficient of thermal expansion. Consequently, there is a need for free standing silicone resin films having improved mechanical and thermal properties.
US 6,046,283 discloses rubber-modified rigid silicone resins which are the copolymerized reaction product of (A) an organosilicon composition selected from the group consisting (I) an organosilicone resin, (II) hydrolyzable precursors of (I), and an hydrolyzate of (II), (B1) a first silicone rubber having a nonfunctional linear chain length between functional groups from 6 to 100 and (B2) a second silicone rubber having terminal functional groups and a degree of polymerization from about 200 to 1,000.
EP 0 358 452 discloses a process for the addition of compounds containing silicon-bonded hydrogen to compounds containing aliphatic unsaturation and compositions suitable for said process. The process is activated by visible radiation and is conducted in the presence of a platinum complex having one cyclopentadienyl group that is eta-bonded to the platinum atom and three aliphatic groups that are sigma-bonded to the platinum atom and a sensitzer that is capable of absorbing visible light and is capable of transferring energy to said platinum complex such that the hydrosilation reaction is initiated upon exposure to visible light.

### SUMMARY OF THE INVENTION

The present invention is directed to a method of preparing a silicone resin film, the method comprising the steps of:
coating a release liner with a nanomaterial-filled silicone composition, wherein the silicone composition comprises:
   a hydrosilylation-curable silicone composition comprising a silicone resin having an average of at least two silicon-bonded alkenyl groups or silicon-bonded hydrogen atoms per molecule and a photoactivated hydrosilylation catalyst, and
   a carbon nanomaterial; and
   exposing the coating to radiation having a wavelength of from 150 to 800 nm at a dosage sufficient to cure the silicone resin.

The present invention is also directed to a silicone resin film prepared according to the aforementioned method.

The present invention is further directed to a nanomaterial-filled silicone composition, comprising:
a hydrosilylation-curable silicone composition comprising a silicone resin having an average of at least two silicon-bonded alkenyl groups or silicon-bonded hydrogen atoms per molecule, and a photoactivated hydrosilylation catalyst; and
a carbon nanomaterial.

The silicone resin film of the present invention has low coefficient of thermal expansion, high tensile strength, and high modulus compared to a silicone resin film prepared from the same silicone composition absent the carbon nanomaterial. Also, although the filled (i.e., carbon nanomaterial-containing) and unfilled silicone resin films have comparable glass transition temperatures, the former film exhibits a smaller change in modulus in the temperature range corresponding to the glass transition.

The silicone resin film of the present invention is useful in applications requiring films having high thermal stability, flexibility, mechanical strength, and transparency. For example, the silicone resin film can be used as an integral component of flexible displays, solar cells, flexible electronic boards, touch screens, fire-resistant wallpaper, and impact-resistant windows. The film is also a suitable substrate for transparent or nontransparent electrodes.

### DETAILED DESCRIPTION OF THE INVENTION

As used herein, the term "free of aliphatic unsaturation" means the hydrocarbyl or halogen-substituted hydrocarbyl group does not contain an aliphatic carbon-carbon double bond or carbon-carbon triple bond. Also, the term "mol% of the groups R² in the silicone resin are alkenyl" is defined as the ratio of the number of moles of silicon-bonded alkenyl groups in the silicone resin to the total number of moles of the groups R² in the resin, multiplied by 100. Further, the term "mol% of the groups R⁴ in the organohydrogenpolysiloxane resin are organosilylalkyl" is defined as the ratio of the number of moles of silicon-bonded organosilylalkyl groups in the organohydrogenpolysiloxane resin to the total number of moles of the groups R⁴ in the resin, multiplied by 100. Still further, the term "mol% of the groups R⁵ in the silicone resin are hydrogen" is defined as the ratio of the number of moles of silicon-bonded hydrogen atoms in the silicone resin to the total number of moles of the groups R⁵ in the resin, multiplied by 100.

A nanomaterial-filled silicone composition according to the present invention, comprises:
a hydrosilylation-curable silicone composition comprising a silicone resin having an average of at least two silicon-bonded alkenyl groups or silicon-bonded hydrogen atoms per molecule, and a photoactivated hydrosilylation catalyst; and
a carbon nanomaterial.

The hydrosilylation-curable silicone composition can be any hydrosilylation-curable silicone composition containing a silicone resin having an average of at least two silicon-bonded alkenyl groups or silicon-bonded hydrogen atoms per molecule, and a photoactivated hydrosilylation catalyst. Typically, the hydrosilylation-curable silicone composition comprises the aforementioned silicone resin; an organosilicon compound in an amount sufficient to cure the silicone resin, wherein the organosilicon compound has an average of at least two silicon-bonded hydrogen atoms or silicon-bonded alkenyl groups per molecule capable of reacting with the silicon-bonded alkenyl groups or silicon-bonded hydrogen atoms in the silicone resin; and a catalytic amount of a photoactivated hydrosilylation catalyst.

The silicone resin of the hydrosilylation-curable silicone composition is typically a copolymer containing T and/or Q siloxane units in combination with M and/or D siloxane units. Moreover, the silicone resin can be a rubber-modified silicone resin, described below for the fifth and sixth embodiments of the hydrosilylation-curable silicone composition.

According to a first embodiment, the hydrosilylation-curable silicone composition comprises (A) a silicone resin having the formula (R¹R²₂SiO_{1/2})_{w}(R²₂SiO_{2/2})ₓ (R¹SiO_{3/2})_{y}(SiO_{4/2})_{z} (I), wherein R¹ is C₁ to C₁₀ hydrocarbyl or C₁ to C₁₀ halogen-substituted hydrocarbyl, both free of aliphatic unsaturation, R² is R¹ or alkenyl, w is from 0 to 0.8, x is from 0 to 0.6, y is from 0 to 0.99, z is from 0 to 0.35, w+x+y+z=1, y+z/(w+x+y+z) is from 0.2 to 0.99, and w+x/(w+x+y+z) is from 0.01 to 0.8, provided the silicone resin has an average of at least two silicon-bonded alkenyl groups per molecule; (B) an organosilicon compound having an average of at least two silicon-bonded hydrogen atoms per molecule in an amount sufficient to cure the silicone resin; and (C) a catalytic amount of a photoactivated hydrosilylation catalyst.

Component (A) is at least one silicone resin having the formula (R¹R²₂SiO_{1/2})_{w} (R²₂SiO_{2/2})ₓ(R¹SiO_{3/2})_{y}(SiO_{4/2})_{z} (I), wherein R¹ is C₁ to C₁₀ hydrocarbyl or C₁ to C₁₀ halogen-substituted hydrocarbyl, both free of aliphatic unsaturation, R² is R¹ or alkenyl, w is from 0 to 0.8, x is from 0 to 0.6, y is from 0 to 0.99, z is from 0 to 0.35, w+x+y+z=1, y+z/(w+x+y+z) is from 0.2 to 0.99, and w+x/(w+x+y+z) is from 0.01 to 0.8, provided the silicone resin has an average of at least two silicon-bonded alkenyl groups per molecule.

The hydrocarbyl and halogen-substituted hydrocarbyl groups represented by R¹ are free of aliphatic unsaturation and typically have from 1 to 10 carbon atoms, alternatively from 1 to 6 carbon atoms. Acyclic hydrocarbyl and halogen-substituted hydrocarbyl groups containing at least 3 carbon atoms can have a branched or unbranched structure. Examples of hydrocarbyl groups represented by R¹ include, but are not limited to, alkyl, such as methyl, ethyl, propyl, 1-methylethyl, butyl, 1-methylpropyl, 2-methylpropyl, 1,1-dimethylethyl, pentyl, 1-methylbutyl, 1-ethylpropyl, 2-methylbutyl, 3-methylbutyl, 1,2-dimethylpropyl, 2,2-dimethylpropyl, hexyl, heptyl, octyl, nonyl, and decyl; cycloalkyl, such as cyclopentyl, cyclohexyl, and methylcyclohexyl; aryl, such as phenyl and naphthyl; alkaryl, such as tolyl and xylyl; and aralkyl, such as benzyl and phenethyl. Examples of halogen-substituted hydrocarbyl groups represented by R¹ include, but are not limited to, 3,3,3-trifluoropropyl, 3-chloropropyl, chlorophenyl, dichlorophenyl, 2,2,2-trifluoroethyl, 2,2,3,3-tetrafluoropropyl, and 2,2,3,3,4,4,5,5-octafluoropentyl.

The alkenyl groups represented by R², which may be the same or different, typically have from 2 to about 10 carbon atoms, alternatively from 2 to 6 carbon atoms, and are exemplified by, but not limited to, vinyl, allyl, butenyl, hexenyl, and octenyl.

In the formula (I) of the silicone resin, the subscripts w, x, y, and z are mole fractions. The subscript w typically has a value of from 0 to 0.8, alternatively from 0.02 to 0.75, alternatively from 0.05 to 0.3; the subscript x typically has a value of from 0 to 0.6, alternatively from 0 to 0.45, alternatively from 0 to 0.25; the subscript y typically has a value of from 0 to 0.99, alternatively from 0.25 to 0.8, alternatively from 0.5 to 0.8; the subscript z typically has a value of from 0 to 0.35, alternatively from 0 to 0.25, alternatively from 0 to 0.15. Also, the ratio y+z/(w+x+y+z) is typically from 0.2 to 0.99, alternatively from 0.5 to 0.95, alternatively from 0.65 to 0.9. Further, the ratio w+x/(w+x+y+z) is typically from 0.01 to 0.80, alternatively from 0.05 to 0.5, alternatively from 0.1 to 0.35.

Typically at least 50 mol%, alternatively at least 65 mol%, alternatively at least 80 mol% of the groups R² in the silicone resin are alkenyl.

The silicone resin typically has a number-average molecular weight (Mₙ) of from 500 to 50,000, alternatively from 500 to 10,000, alternatively 1,000 to 3,000, where the molecular weight is determined by gel permeation chromatography employing a refractive index detector and silicone resin (MQ) standards.

The viscosity of the silicone resin at 25 °C is typically from 0.01 to 100,000 Pa·s, alternatively from 0.1 to 10,000 Pa·s, alternatively from 1 to 100 Pa·s.

The silicone resin typically contains less than 10% (w/w), alternatively less than 5% (w/w), alternatively less than 2% (w/w), of silicon-bonded hydroxy groups, as determined by 29_{Si} NMR.

The silicone resin contains R¹SiO_{3/2} units (i.e., T units) and/or SiO_{4/2} units (i.e., Q units) in combination with R¹R²₂SiO_{1/2} units (i.e., M units) and/or R²₂SiO_{2/2} units (i.e., D units), where R¹ and R² are as described and exemplified above. For example, the silicone resin can be a DT resin, an MT resin, an MDT resin, a DTQ resin, and MTQ resin, and MDTQ resin, a DQ resin, an MQ resin, a DTQ resin, an MTQ resin, or an MDQ resin.

Examples of silicone resins include, but are not limited to, resins having the following formulae:
(Vi₂MeSiO_{1/2})_{0.25}(PhSiO_{3/2})_{0.75}, (ViMe₂SiO_{1/2})_{0.25}(PhSiO_{3/2})_{0.75}, (ViMe₂SiO_{1/2})_{0.25}(MeSiO_{3/2})_{0.25}(PhSiO_{3/2})_{0.50}, (ViMe₂SiO_{1/2})_{0.15}(PhSiO_{3/2})_{0.75} (SiO_{4/2})_{0.1}, and (Vi₂MeSiO_{1/2})_{0.15}(ViMe₂SiO_{1/2})_{0.1}(PhSiO_{3/2})_{0.75}, where Me is methyl, Vi is vinyl, Ph is phenyl, and the numerical subscripts outside the parenthesis denote mole fractions. Also, in the preceding formulae, the sequence of units is unspecified.

Component (A) can be a single silicone resin or a mixture comprising two or more different silicone resins, each as described above.

Methods of preparing silicone resins are well known in the art; many of these resins are commercially available. Silicone resins are typically prepared by cohydrolyzing the appropriate mixture of chlorosilane precursors in an organic solvent, such as toluene. For example, a silicone resin consisting essentially of R¹R²₂SiO_{1/2} units and R¹SiO_{3/2} units can be prepared by cohydrolyzing a compound having the formula R¹R²₂SiCl and a compound having the formula R¹ SiCl₃ in toluene, where R¹ and R² are as defined and exemplified above. The aqueous hydrochloric acid and silicone hydrolyzate are separated and the hydrolyzate is washed with water to remove residual acid and heated in the presence of a mild condensation catalyst to "body" the resin to the requisite viscosity. If desired, the resin can be further treated with a condensation catalyst in an organic solvent to reduce the content of silicon-bonded hydroxy groups. Alternatively, silanes containing hydrolysable groups other than chloro, such -Br, -I, -OCH₃, -OC(O)CH₃, -N(CH₃)₂, NHCOCH₃, and - SCH₃, can be utilized as starting materials in the cohydrolysis reaction. The properties of the resin products depend on the types of silanes, the mole ratio of silanes, the degree of condensation, and the processing conditions.

Component (B) is at least one organosilicon compound having an average of at least two silicon-bonded hydrogen atoms per molecule in an amount sufficient to cure the silicone resin of component (A).

The organosilicon compound has an average of at least two silicon-bonded hydrogen atoms per molecule, alternatively at least three silicon-bonded hydrogen atoms per molecule. It is generally understood that cross-linking occurs when the sum of the average number of alkenyl groups per molecule in component (A) and the average number of silicon-bonded hydrogen atoms per molecule in component (B) is greater than four.

The organosilicon compound can be an organohydrogensilane or an organohydrogensiloxane. The organohydrogensilane can be a monosilane, disilane, trisilane, or polysilane. Similarly, the organohydrogensiloxane can be a disiloxane, trisiloxane, or polysiloxane. The structure of the organosilicon compound can be linear, branched, cyclic, or resinous. Cyclosilanes and cyclosiloxanes typically have from 3 to 12 silicon atoms, alternatively from 3 to 10 silicon atoms, alternatively from 3 to 4 silicon atoms. In acyclic polysilanes and polysiloxanes, the silicon-bonded hydrogen atoms can be located at terminal, pendant, or at both terminal and pendant positions.

Examples of organohydrogensilanes include, but are not limited to, diphenylsilane, 2-chloroethylsilane, bis[(p-dimethylsilyl)phenyl]ether, 1,4-dimethyldisilylethane, 1,3,5-tris(dimethylsilyl)benzene, 1,3,5-trimethyl-1,3,5-trisilane, poly(methylsilylene)phenylene, and poly(methylsilylene)methylene.

The organohydrogensilane can also have the formula HR¹₂Si-R³-SiR¹₂H, wherein R¹ is C₁ to C₁₀ hydrocarbyl or C₁ to C₁₀ halogen-substituted hydrocarbyl, both free of aliphatic unsaturation, and R³ is a hydrocarbylene group free of aliphatic unsaturation having a formula selected from: 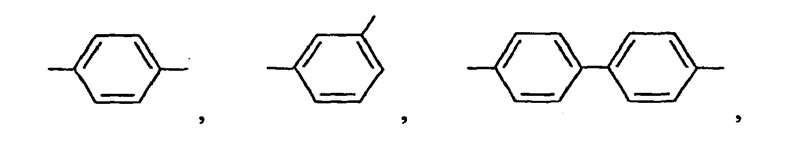 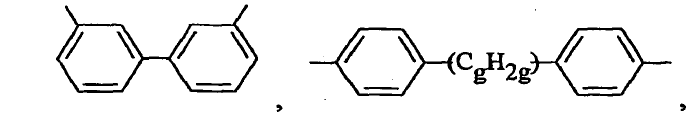 and 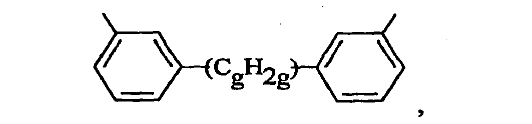 wherein g is from 1 to 6. The hydrocarbyl and halogen-substituted hydrocarbyl groups represented by R¹ are as defined and exemplified above for the silicone resin of component (A).

Examples of organohydrogensilanes having the formula HR¹₂Si-R³-SiR¹₂H, wherein R¹ and R³ are as described and exemplified above include, but are not limited to, silanes having the following formulae: 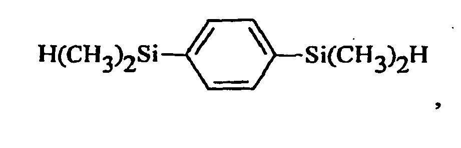 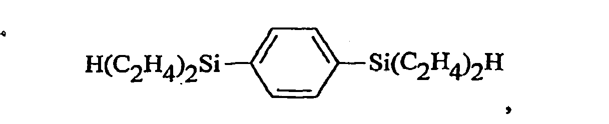 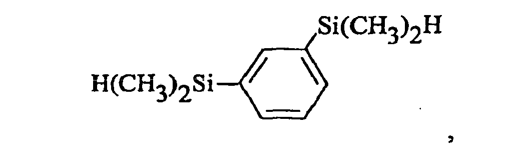 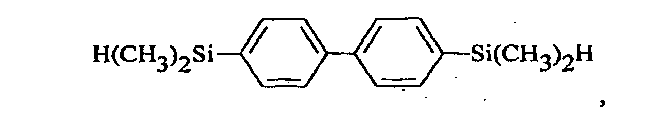 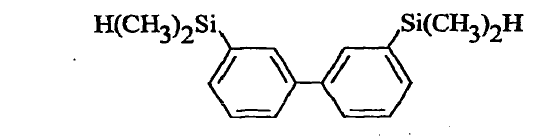 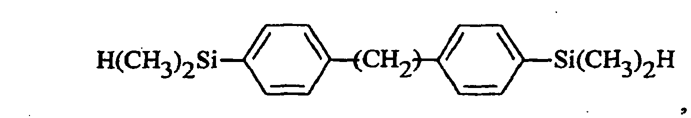 and

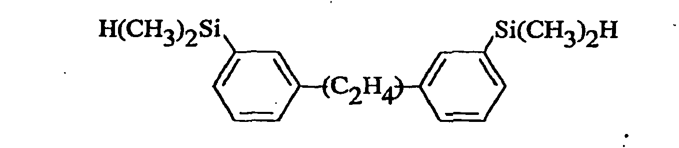

Examples oforganohydrogensiloxanes include, but are not limited to, 1,1,3,3-tetramethyldisiloxane, 1,1,3,3-tetraphenyldisiloxane, phenyltris(dimethylsiloxy)silane, 1,3,5-trimethylcyclotrisiloxane, a trimethylsiloxy-terminated poly(methylhydrogensiloxane), a trimethylsiloxy-terminated poly(dimethylsiloxane/methylhydrogensiloxane), a dimethylhydrogensiloxy-terminated poly(methylhydrogensiloxane), and a resin consisting essentially of HMe₂SiO_{1/2} units, Me₃SiO_{1/2} units, and SiO_{4/2} units, wherein Me is methyl.

The organohydrogensiloxane can also be an organohydrogenpolysiloxane resin having he formula (R¹R⁴₂SiO_{1/2})_{w}(R⁴₂SiO_{2/2})ₓ(R¹SiO_{3/2})_{y}(SiO_{4/2})_{z} (II), wherein R¹ is C₁ to C₁₀ hydrocarbyl or C₁ to C₁₀ halogen-substituted hydrocarbyl, both free of aliphatic unsaturation, R⁴ is R¹ or an organosilylalkyl group having at least one silicon-bonded hydrogen atom, w is from 0 to 0.8, x is from 0 to 0.6, y is from 0 to 0.99, z is from 0 to 0.35, w+x+y+z=1, y+z/(w+x+y+z) is from 0.2 to 0.99, and w+x/(w+x+y+z) is from 0.01 to 0.8, provided at least 50 mol% of the groups R⁴ are organosilylalkyl.

The hydrocarbyl and halogen-substituted hydrocarbyl groups represented by R¹ are as described and exemplified above for the silicone resin of component (A). Examples of organosilylalkyl groups represented by R⁴ include, but are not limited to, groups having the following formulae: 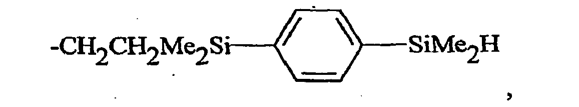 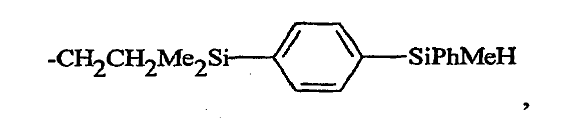 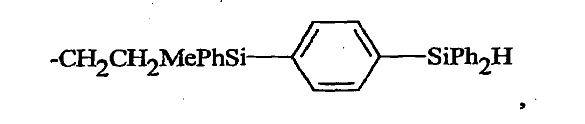 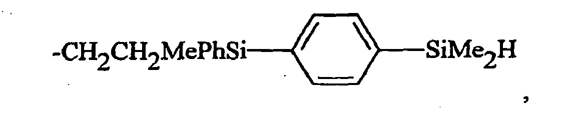
- CH₂CH₂SiMe₂H,
- CH₂CH₂SiMe₂CₙH₂ₙSiMe₂H,
- CH₂CH₂SiMe₂CₙH₂ₙSiMePhH,
- CH₂CH₂SiMePhH,
- CH₂CH₂SiPh₂H,
- CH₂CH₂SiMePhCₙH₂ₙSiPh₂H,
- CH₂CH₂SiMePhCₙH₂ₙSiMe₂H,
- CH₂CH₂SiMePhOSiMePhH, and
- CH₂CH₂SiMePhOSiPh(OSiMePhH)₂, where Me is methyl, Ph is phenyl, and the subscript n has a value of from 2 to 10.

In the formula (II) of the organohydrogenpolysiloxane resin, the subscripts w, x, y, and z are mole fractions. The subscript w typically has a value of from 0 to 0.8, alternatively from 0.02 to 0.75, alternatively from 0.05 to 0.3; the subscript x typically has a value of from 0 to 0.6, alternatively from 0 to 0.45, alternatively from 0 to 0.25; the subscript y typically has a value of from 0 to 0.99, alternatively from 0.25 to 0.8, alternatively from 0.5 to 0.8; the subscript z typically has a value of from 0 to 0.35, alternatively from 0 to 0.25, alternatively from 0 to 0.15. Also, the ratio y+z/(w+x+y+z) is typically from 0.2 to 0.99, alternatively from 0.5 to 0.95, alternatively from 0.65 to 0.9. Further, the ratio w+x/(w+x+y+z) is typically from 0.01 to 0.80, alternatively from 0.05 to 0.5, alternatively from 0.1 to 0.35.

Typically, at least 50 mol%, alternatively at least 65 mol%, alternatively at least 80 mol% of the groups R⁴ in the organohydrogenpolysiloxane resin are organosilylalkyl groups having at least one silicon-bonded hydrogen atom.

The organohydrogenpolysiloxane resin typically has a number-average molecular weight (Mₙ) of from 500 to 50,000, alternatively from 500 to 10,000, alternatively 1,000 to 3,000, where the molecular weight is determined by gel permeation chromatography employing a refractive index detector and silicone resin (MQ) standards.

The organohydrogenpolysiloxane resin typically contains less than 10% (w/w), alternatively less than 5% (w/w), alternatively less than 2% (w/w), of silicon-bonded hydroxy groups, as determined by ²⁹Si NMR.

The organohydrogenpolysiloxane resin contains R¹SiO_{3/2} units (i.e., T units) and/or SiO_{4/2} units (i.e., Q units) in combination with R¹R⁴₂SiO_{1/2} units (i.e., M units) and/or R⁴₂SiO_{2/2} units (i.e., D units), where R¹ and R⁴ are as described and exemplified above. For example, the organohydrogenpolysiloxane resin can be a DT resin, an MT resin, an MDT resin, a DTQ resin, and MTQ resin, and MDTQ resin, a DQ resin, an MQ resin, a DTQ resin, an MTQ resin, or an MDQ resin.

Examples of organohydrogenpolysiloxane resins include, but are not limited to, resins having the following formulae:
((HMe₂SiC₆H₄SiMe₂CH₂CH₂)₂MeSiO_{1/2})_{0.12}(PhSiO_{3/2})_{0.88},
((HMe₂SiC₆H₄SiMe₂CH₂CH2)₂MeSiO_{1/2})_{0.17}(PhSiO_{3/2})_{0.83},
((HMe₂SiC₆H₄SiMe₂CH₂CH₂)₂MeSiO_{1/2})_{0.17}(MeSiO_{3/2})_{0.17}(PhSiO_{3/2})_{0.66},
((HMe₂SiC₆H₄SiMe₂CH₂CH₂)₂MeSiO_{1/2})_{0.15}(PhSiO_{3/2})_{0.75}(SiO_{4/2})_{0.10}, and
((HMe₂SiC₆H₄SiMe₂CH₂CH₂)₂MeSiO_{1/2})_{0.08}((HMe₂SiC₆H₄SiMe₂CH₂CH₂)
Me₂SiO_{1/2})_{0.06} (PhSiO_{3/2})_{0.86}, where Me is methyl, Ph is phenyl, C₆H₄ denotes a para-phenylene group, and the numerical subscripts outside the parenthesis denote mole fractions. Also, in the preceding formulae, the sequence of units is unspecified.

Component (B) can be a single organosilicon compound or a mixture comprising two or more different organosilicon compounds, each as described above. For example, component (B) can be a single organohydrogensilane, a mixture of two different organohydrogensilanes, a single organohydrogensiloxane, a mixture of two different organohydrogensiloxanes, or a mixture of an organohydrogensilane and an organohydrogensiloxane. In particular, component (B) can be a mixture comprising at least 0.5% (w/w), alternatively at least 50% (w/w), alternatively at least 75% (w/w), based on the total weight of component (B), of the organohydrogenpolysiloxane resin having the formula (II), and an organohydrogensilane and/or organohydrogensiloxane, the latter different from the organohydrogenpolysiloxane resin.

The concentration of component (B) is sufficient to cure (cross-link) the silicone resin of component (A). The exact amount of component (B) depends on the desired extent of cure, which generally increases as the ratio of the number of moles of silicon-bonded hydrogen atoms in component (B) to the number of moles of alkenyl groups in component (A) increases. The concentration of component (B) is typically sufficient to provide from 0.4 to 2 moles of silicon-bonded hydrogen atoms, alternatively from 0.8 to 1.5 moles of silicon-bonded hydrogen atoms, alternatively from 0.9 to 1.1 moles of silicon-bonded hydrogen atoms, per mole of alkenyl groups in component (A).

Methods of preparing organosilicon compounds containing silicon-bonded hydrogen atoms are well known in the art. For example, organohydrogensilanes can be prepared by reaction of Grignard reagents with alkyl or aryl halides. In particular, organohydrogensilanes having the formula HR¹₂Si-R³-SiR¹₂H can be prepared by treating an aryl dihalide having the formula R³X₂ with magnesium in ether to produce the corresponding Grignard reagent and then treating the Grignard reagent with a chlorosilane having the formula HR¹₂SiCl, where R¹ and R³ are as described and exemplified above.

Methods of preparing organohydrogensiloxanes, such as the hydrolysis and condensation of organohalosilanes, are also well known in the art.

In addition, the organohydrogenpolysiloxane resin having the formula (II) can be prepared by reacting (a) a silicone resin having the formula (R¹R²₂SiO_{1/2})_{w}(R²₂SiO_{2/2})ₓ (R¹SiO_{3/2})_{y}(SiO_{4/2})_{z} (I) with (b) an organosilicon compound having an average of from two to four silicon-bonded hydrogen atoms per molecule and a molecular weight less than 1,000, in the presence of (c) a hydrosilylation catalyst and, optionally, (d) an organic solvent, wherein R¹ is C₁ to C₁₀ hydrocarbyl or C₁ to C₁₀ halogen-substituted hydrocarbyl, both free of aliphatic unsaturation, R² is R¹ or alkenyl, w is from 0 to 0.8, x is from 0 to 0.6, y is from 0 to 0.99, z is from 0 to 0.35, w+x+y+z=1, y+z/(w+x+y+z) is from 0.2 to 0.99, and w+x/(w+x+y+z) is from 0.01 to 0.8, provided the silicone resin (a) has an average of at least two silicon-bonded alkenyl groups per molecule, and the mole ratio of silicon-bonded hydrogen atoms in (b) to alkenyl groups in (a) is from 1.5 to 5.

Silicone resin (a) is as described and exemplified above for component (A) of the silicone composition. Silicone resin (a) can be the same as or different than the silicone resin used as component (A) in the hydrosilylation-curable silicone composition.

Organosilicon compound (b) is at least one organosilicon compound having an average of from two to four silicon-bonded hydrogen atoms per molecule. Alternatively, the organosilicon compound has an average of from two to three silicon-bonded hydrogen atoms per molecule. The organosilicon compound typically has a molecular weight less than 1,000, alternatively less than 750, alternatively less than 500. The silicon-bonded organic groups in the organosilicon compound are selected from hydrocarbyl and halogen-substituted hydrocarbyl groups, both free of aliphatic unsaturation, which are as described and exemplified above for R¹ in the formula of the silicone resin of component (A).

Organosilicon compound (b) can be an organohydrogensilane or an organohydrogensiloxane. The organohydrogensilane can be a monosilane, disilane, trisilane, or polysilane. Similarly, the organohydrogensiloxane can be a disiloxane, trisiloxane, or polysiloxane. The structure of the organosilicon compound can be linear, branched, or cyclic. Cyclosilanes and cyclosiloxanes typically have from 3 to 12 silicon atoms, alternatively from 3 to 10 silicon atoms, alternatively from 3 to 4 silicon atoms. In acyclic polysilanes and polysiloxanes, the silicon-bonded hydrogen atoms can be located at terminal, pendant, or at both terminal, and pendant positions.

Examples of organohydrogensilanes include, but are not limited to, diphenylsilane, 2-chloroethylsilane, bis[(p-dimethylsilyl)phenyl]ether, 1,4-dimethyldisilylethane, 1,3,5-tris(dimethylsilyl)benzene, and 1,3,5-trimethyl-1,3,5-trisilane. The organohydrogensilane can also have the formula HR¹₂Si-R³-SiR¹₂H, wherein R¹ and R³ are as described and exemplified above.

Examples of organohydrogensiloxanes include, but are not limited to, 1,1,3,3-tetramethyldisiloxane, 1,1,3,3-tetraphenyldisiloxane, phenyltris(dimethylsiloxy)silane, and 1,3,5-trimethylcyclotrisiloxane.

Organosilicon compound (b) can be a single organosilicon compound or a mixture comprising two or more different organosilicon compounds, each as described above. For example, component (B) can be a single organohydrogensilane, a mixture of two different organohydrogensilanes, a single organohydrogensiloxane, a mixture of two different organohydrogensiloxanes, or a mixture of an organohydrogensilane and an organohydrogensiloxane.

Methods of preparing organohydrogensilanes, such as the reaction of Grignard reagents with alkyl or aryl halides, described above, are well known in the art. Similarly, methods of preparing oxganohydrogensiloxanes, such as the hydrolysis and condensation of organohalosilanes, are well known in the art.

Hydrosilylation catalyst (c) can be any of the well-known hydrosilylation catalysts comprising a platinum group metal (i.e., platinum, rhodium, ruthenium, palladium, osmium and iridium) or a compound containing a platinum group metal. Preferably, the platinum group metal is platinum, based on its high activity in hydrosilylation reactions.

Hydrosilylation catalysts include the complexes ofchloroplatinic acid and certain vinyl-containing organosiloxanes disclosed by Willing in U.S. Pat. No. 3,419,593. A catalyst of this type is the reaction product of chloroplatinic acid and 1,3-diethenyl-1,1,3,3-tetramethyldisiloxane.

The hydrosilylation catalyst can also be a supported hydrosilylation catalyst comprising a solid support having a platinum group metal on the surface thereof. A supported catalyst can be conveniently separated from the organohydrogenpolysiloxane resin product, for example, by filtering the reaction mixture. Examples of supported catalysts include, but are not limited to, platinum on carbon, palladium on carbon, ruthenium on carbon, rhodium on carbon, platinum on silica, palladium on silica, platinum on alumina, palladium on alumina, and ruthenium on alumina.

Organic solvent (d) is at least one organic solvent. The organic solvent can be any aprotic or dipolar aprotic organic solvent that does not react with silicone resin (a), organosilicon compound (b), or the organohydrogenpolysiloxane resin under the conditions of the present method, and is miscible with components (a), (b), and the organohydrogenpolysiloxane resin.

Examples of organic solvents include, but are not limited to, saturated aliphatic hydrocarbons such as n-pentane, hexane, n-heptane, isooctane and dodecane; cycloaliphatic hydrocarbons such as cyclopentane and cyclohexane; aromatic hydrocarbons such as benzene, toluene, xylene and mesitylene; cyclic ethers such as tetrahydrofuran (THF) and dioxane; ketones such as methyl isobutyl ketone (MIBK); halogenated alkanes such as trichloroethane; and halogenated aromatic hydrocarbons such as bromobenzene and chlorobenzene. Organic solvent (d) can be a single organic solvent or a mixture comprising two or more different organic solvents, each as described above.

The reaction can be carried out in any standard reactor suitable for hydrosilylation reactions. Suitable reactors include glass and Teflon-lined glass reactors. Preferably, the reactor is equipped with a means of agitation, such as stirring. Also, preferably, the reaction is carried out in an inert atmosphere, such as nitrogen or argon, in the absence of moisture.

The silicone resin, organosilicon compound, hydrosilylation catalyst, and, optionally, organic solvent, can be combined in any order. Typically, organosilicon compound (b) and hydrosilylation catalyst (c) are combined before the introduction of the silicone resin (a) and, optionally, organic solvent (d).

The reaction is typically carried out at a temperature of from 0 to 150 °C, alternatively from room temperature (~23 ± 2°C) to 115°C. When the temperature is less than 0 °C, the rate of reaction is typically very slow.

The reaction time depends on several factors, such as the structures of the silicone resin and the organosilicon compound, and the temperature. The time of reaction is typically from 1 to 24 h at a temperature of from room temperature (~23 ± 2°C) to 150°C. The optimum reaction time can be determined by routine experimentation using the methods set forth in the Examples section below.

The mole ratio of silicon-bonded hydrogen atoms in organosilicon compound (b) to alkenyl groups in silicone resin (a) is typically from 1.5 to 5, alternatively from 1.75 to 3, alternatively from 2 to 2.5.

The concentration of hydrosilylation catalyst (c) is sufficient to catalyze the addition reaction of silicone resin (a) with organosilicon compound (b). Typically, the concentration of hydrosilylation catalyst (c) is sufficient to provide from 0.1 to 1000 ppm of a platinum group metal, alternatively from 1 to 500 ppm of a platinum group metal, alternatively from 5 to 150 ppm of a platinum group metal, based on the combined weight of silicone resin (a) and organosilicon compound (b). The rate of reaction is very slow below 0.1 ppm of platinum group metal. The use of more than 1000 ppm of platinum group metal results in no appreciable increase in reaction rate, and is therefore uneconomical.

The concentration of organic solvent (d) is typically from 0 to 99% (w/w), alternatively from 30 to 80% (w/w), alternatively from 45 to 60% (w/w), based on the total weight of the reaction mixture.

The organohydrogenpolysiloxane resin can be used without isolation or purification in the first embodiment of the hydrosilylation-curable silicone composition or the resin can be separated from most of the solvent by conventional methods of evaporation. For example, the reaction mixture can be heated under reduced pressure. Moreover, when the hydrosilylation catalyst used to prepare the organohydrogenpolysiloxane resin is a supported catalyst, described above, the resin can be readily separated from the hydrosilylation catalyst by filtering the reaction mixture.

Component (C) of the hydrosilylation-curable silicone composition is at least one photoactivated hydrosilylation catalyst. The photoactivated hydrosilylation catalyst can be any hydrosilylation catalyst capable of catalyzing the hydrosilylation of component (A) with component (B) upon exposure to radiation having a wavelength of from 150 to 800 nm. The photoactivated hydrosilylation catalyst can be any of the well-known hydrosilylation catalysts comprising a platinum group metal or a compound containing a platinum group metal. The platinum group metals include platinum, rhodium, ruthenium, palladium, osmium and iridium. Typically, the platinum group metal is platinum, based on its high activity in hydrosilylation reactions. The suitability of particular photoactivated hydrosilylation catalyst for use in the silicone composition of the present invention can be readily determined by routine experimentation using the methods in the Examples section below.

Examples of photoactivated hydrosilylation catalysts include, but are not limited to, platinum(II) β-diketonate complexes such as platinum(II) bis(2,4-pentanedioate), platinum(II) bis(2,4-hexanedioate), platinum(II) bis(2,4-heptanedioate), platinum(II) bis(1-phenyl-1,3-butanedioate, platinum(II) bis(1,3-diphenyl-1,3-propanedioate), platinum(II) bis(1,1,1,5,5,5-hexafluoro-2,4-pentanedioate); (η-cyclopentadienyl)trialkylplatinum complexes, such as (Cp)trimethylplatinum, (Cp)ethyldimethylplatinum, (Cp)triethylplatinum, (chloro-Cp)trimethylplatinum, and (trimethylsilyl-Cp)trimethylplatinum, where Cp represents cyclopentadienyl; triazene oxide-transition metal complexes, such as Pt[C₆H₅NNNOCH₃]₄, Pt[p-CN-C₆H₄NNNOC₆H₁₁]₄, Pt[p-H₃COC₆H₄NNNOC₆H₁₁]₄, Pt[_{P}-CH₃(CH₂)ₓ-C₆H₄NNNOCH₃]₄,1,5-cyclooctadiene.Pt[p-CN-C₆H₄NNNOC₆H₁₁]₂,1,5-cyclooctadiene.Pt[p-CH₃O-C₆H₄NNNOCH₃]₂, [(C₆H₅)₃P]₃Rh[p-CN-C₆H₄NNNOC₆H₁₁], and Pd[p-CH₃(CH₂)ₓ-C₆H₄NNNOCH₃]₂, where x is 1,3,5,11, or 17; (η-diolefin)(σ-aryl)platinum complexes, such as (η⁴-1,5-cyclooctadienyl)diphenylplatinum, η⁴-1,3,5,7-cyclooctatetraenyl)diphenylplatinum, (η⁴-2,5-norboradienyl)diphenylplatinum, (η⁴-1,5-cyclooctadienyl)bis-(4-dimethylaminophenyl)platinum, (η⁴-1,5-cyclooctadienyl)bis-(4-acetylphenyl)platinum, and (η⁴-1,5-cyclooctadienyl)bis-(4-trifluormethylphenyl)platinum. Preferably, the photoactivated hydrosilylation catalyst is a Pt(II) β-diketonate complex and more preferably the catalyst is platinum(II) bis(2,4-pentanedioate).

Component (C) can be a single photoactivated hydrosilylation catalyst or a mixture comprising two or more different photoactivated hydrosilylation catalysts.

The concentration of component (C) is sufficient to catalyze the addition reaction of component (A) with (B) upon exposure to radiation as described in the method below. The concentration of component (C) is sufficient to provide typically from 0.1 to 1000 ppm of platinum group metal, alternatively from 0.5 to 100 ppm of platinum group metal, alternatively from 1 to 25 ppm of platinum group metal, based on the combined weight of components (A) and (B). The rate of cure is very slow below 1 ppm of platinum group metal. The use of more than 100 ppm of platinum group metal results in no appreciable increase in cure rate, and is therefore uneconomical.

Methods of preparing photoactivated hydrosilylation catalysts are well known in the art. For example, methods of preparing platinum(II) β-diketonates are reported by Guo et al. (Chemistry of Materials, 1998, 10, 531-536). Methods of preparing (η-cyclopentadienyl)-trialkylplatinum complexes and are disclosed in U.S. Patent No. 4,510,094. Methods of preparing triazene oxide-transition metal complexes are disclosed in U.S. Patent No. 5,496,961. And, methods of preparing (η-diolefin)(σ-aryl)platinum complexes are taught in U.S. Patent No. 4,530,879.

According to a second embodiment, the hydrosilylation-curable silicone composition comprises (A') a silicone resin having the formula (R¹R⁵₂SiO_{1/2})_{w} (R⁵₂SiO_{2/2})ₓ(R⁵SiO_{3/2})_{y}(SiO_{4/2})_{z} (III), wherein R¹ is C₁ to C₁₀ hydrocarbyl or C₁ to C₁₀ halogen-substituted hydrocarbyl, both free of aliphatic unsaturation, R⁵ is R¹ or -H, w is from 0 to 0.8, x is from 0 to 0.6, y is from 0 to 0.99, z is from 0 to 0.35, w+x+y+z=1, y+z/(w+x+y+z) is from 0.2 to 0.99, and w+x/(w+x+y+z) is from 0.01 to 0.8, provided the silicone resin has an average of at least two silicon-bonded hydrogen atoms per molecule; (B') an organosilicon compound having an average of at least two silicon-bonded alkenyl groups per molecule in an amount sufficient to cure the silicone resin; and (C) a catalytic amount of a photoactivated hydrosilylation catalyst.

Component (A') is at least one silicone resin having the formula (R¹R⁵₂SiO_{1/2})_{w} (R⁵₂SiO_{2/2})ₓ(R⁵SiO_{3/2})_{y}(SiO_{4/2})_{z} (III), wherein R¹ is C₁ to C₁₀ hydrocarbyl or C₁ to C₁₀ halogen-substituted hydrocarbyl, both free of aliphatic unsaturation, R⁵ is R¹ or -H, w is from 0 to 0.8, x is from 0 to 0.6, y is from 0 to 0.99, z is from 0 to 0.35, w+x+y+z=1, y+z/(w+x+y+z) is from 0.2 to 0.99, and w+x/(w+x+y+z) is from 0.01 to 0.8, provided the silicone resin has an average of at least two silicon-bonded hydrogen atoms per molecule. In the formula (III), R¹, w, x, y, z, y+z/(w+x+y+z), and w+x/(w+x+y+z) are as described and exemplified above for the silicone resin having the formula (I).

Typically at least 50 mol%, alternatively at least 65 mol%, alternatively at least 80 mol% of the groups R⁵ in the silicone resin are hydrogen.

The silicone resin typically has a number-average molecular weight (Mₙ) of from 500 to 50,000, alternatively from 500 to 10,000, alternatively 1,000 to 3,000, where the molecular weight is determined by gel permeation chromatography employing a refractive index detector and silicone resin (MQ) standards.

The viscosity of the silicone resin at 25 °C is typically from 0.01 to 100,000 Pa·s, alternatively from 0.1 to 10,000 Pa·s, alternatively from 1 to 100 Pa·s.

The silicone resin typically contains less than 10% (w/w), alternatively less than 5% (w/w), alternatively less than 2% (w/w), of silicon-bonded hydroxy groups, as determined by 29_{Si NMR.}

The silicone resin contains R⁵SiO_{3/2} units (i.e., T units) and/or SiO_{4/2} units (i.e., Q units) in combination with R¹R⁵₂SiO_{1/2} units (i.e., M units) and/or R⁵₂SiO_{2/2} units (i.e., D units). For example, the silicone resin can be a DT resin, an MT resin, an MDT resin, a DTQ resin, and MTQ resin, and MDTQ resin, a DQ resin, an MQ resin, a DTQ resin, an MTQ resin, or an MDQ resin.

Examples of silicone resins suitable for use as component (A') include, but are not limited to, resins having the following formulae:
(HMe₂SiO_{1/2})_{0.25}(PhSiO_{3/2})_{0.75}, (HMeSiO_{2/2})_{0.3}(PhSiO_{3/2})_{0.6}(MeSiO_{3/2})_{0.1}, and
(Me₃SiO_{1/2})_{0.1}(H₂SiO_{2/2})_{0.1}(MeSiO_{3/2})_{0.4}(PhSiO_{3/2})_{0.4}, where Me is methyl, Ph is phenyl, and the numerical subscripts outside the parenthesis denote mole fractions. Also, in the preceding formulae, the sequence of units is unspecified.

Component (A') can be a single silicone resin or a mixture comprising two or more different silicone resins, each as described above.

Methods of preparing silicone resins containing silicon-bonded hydrogen atoms are well known in the art; many of these resins are commercially available. Silicone resins are typically prepared by cohydrolyzing the appropriate mixture of chlorosilane precursors in an organic solvent, such as toluene. For example, a silicone resin consisting essentially of R¹R⁵₂SiO_{1/2} units and R⁵SiO_{3/2} units can be prepared by cohydrolyzing a compound having the formula R¹R⁵₂SiCl and a compound having the formula R⁵SiCl₃ in toluene, where R¹ and R⁵ are as described and exemplified above. The aqueous hydrochloric acid and silicone hydrolyzate are separated and the hydrolyzate is washed with water to remove residual acid and heated in the presence of a mild non-basic condensation catalyst to "body" the resin to the requisite viscosity. If desired, the resin can be further treated with a non-basic condensation catalyst in an organic solvent to reduce the content of silicon-bonded hydroxy groups. Alternatively, silanes containing hydrolysable groups other than chloro, such -Br, -I, -OCH₃, -OC(O)CH₃, -N(CH₃)₂, NHCOCH₃, and -SCH₃, can be utilized as starting materials in the cohydrolysis reaction. The properties of the resin products depend on the types of silanes, the mole ratio of silanes, the degree of condensation, and the processing conditions.

Component (B') is at least one organosilicon compound having an average of at least two silicon-bonded alkenyl groups per molecule in an amount sufficient to cure the silicone resin of component (A').

The organosilicon compound contains an average of at least two silicon-bonded alkenyl groups per molecule, alternatively at least three silicon-bonded alkenyl groups per molecule. It is generally understood that cross-linking occurs when the sum of the average number of silicon-bonded hydrogen atoms per molecule in component (A') and the average number of silicon-bonded alkenyl groups per molecule in component (B') is greater than four.

The organosilicon compound can be an organosilane or an organosiloxane. The organosilane can be a monosilane, disilane, trisilane, or polysilane. Similarly, the organosiloxane can be a disiloxane, trisiloxane, or polysiloxane. The structure of the organosilicon compound can be linear, branched, cyclic, or resinous. Cyclosilanes and cyclosiloxanes typically have from 3 to 12 silicon atoms, alternatively from 3 to 10 silicon atoms, alternatively from 3 to 4 silicon atoms. In acyclic polysilanes and polysiloxanes, the silicon-bonded alkenyl groups can be located at terminal, pendant, or at both terminal, and pendant positions.

Examples of organosilanes suitable for use as component (B') include, but are not limited to, silanes having the following formulae:
Vi₄Si, PhSiVi₃, MeSiVi₃, PhMeSiVi₂, Ph₂SiVi₂, and PhSi(CH₂CH=CH₂)₃, where Me is methyl, Ph is phenyl, and Vi is vinyl.

Examples of organosiloxanes suitable for use as component (B') include, but are not limited to, siloxanes having the following formulae:
PhSi(OSiMe₂Vi)₃, Si(OSiMe₂Vi)₄, MeSi(OSiMe₂Vi)₃, and Ph₂Si(OSiMe₂Vi)₂, where Me is methyl, Ph is phenyl, and Vi is vinyl.

Component (B') can be a single organosilicon compound or a mixture comprising two or more different organosilicon compounds, each as described above. For example component (B') can be a single organosilane, a mixture of two different organosilanes, a single organosiloxane, a mixture of two different organosiloxanes, or a mixture of an organosilane and an organosiloxane.

The concentration of component (B') is sufficient to cure (cross-link) the silicone resin of component (A'). The exact amount of component (B') depends on the desired extent of cure, which generally increases as the ratio of the number of moles of silicon-bonded alkenyl groups in component (B') to the number of moles of silicon-bonded hydrogen atoms in component (A') increases. The concentration of component (B') is typically sufficient to provide from 0.4 to 2 moles of silicon-bonded alkenyl groups, alternatively from 0.8 to 1.5 moles of silicon-bonded alkenyl groups, alternatively from 0.9 to 1.1 moles of silicon-bonded alkenyl groups, per mole of silicon-bonded hydrogen atoms in component (A').

Methods of preparing organosilanes and organosiloxanes containing silicon-bonded alkenyl groups are well known in the art; many of these compounds are commercially available.

Component (C) of the second embodiment of the silicone composition is as described and exemplified above for component (C) of the first embodiment.

According to a third embodiment, the hydrosilylation-curable silicone composition comprises (A) a silicone resin having the formula (R¹R²₂SiO_{1/2})_{w}(R²₂SiO_{2/2})ₓ (R¹SiO_{3/2})_{y}(SiO_{4/2})_{z} (I); (B) an organosilicon compound having an average of at least two silicon-bonded hydrogen atoms per molecule in an amount sufficient to cure the silicone resin; (C) a catalytic amount of a photoactivated hydrosilylation catalyst; and (D) a silicone rubber having a formula selected from (i) R¹R²₂SiO(R²₂SiO)ₐSiR²₂R¹ (IV) and (ii) R⁵R¹₂SiO(R¹R⁵SiO)_{b}SiR¹₂R⁵ (V); wherein R¹ is C₁ to C₁₀ hydrocarbyl or C₁ to C₁₀ halogen-substituted hydrocarbyl, both free of aliphatic unsaturation, R² is R¹ or alkenyl, R⁵ is R¹ or -H, subscripts a and b each have a value of from 1 to 4, w is from 0 to 0.8, x is from 0 to 0.6, y is from 0 to 0.99, z is from 0 to 0.35, w+x+y+z=1, y+z/(w+x+y+z) is from 0.2 to 0.99, and w+x/(w+x+y+z) is from 0.01 to 0.8, provided the silicone resin and the silicone rubber (D)(i) each have an average of at least two silicon-bonded alkenyl groups per molecule, the silicone rubber (D)(ii) has an average of at least two silicon-bonded hydrogen atoms per molecule, and the mole ratio of silicon-bonded alkenyl groups or silicon-bonded hydrogen atoms in the silicone rubber (D) to silicon-bonded alkenyl groups in the silicone resin (A) is from 0.0.1 to 0.5.

Components (A), (B), and (C) of the third embodiment of the silicone composition are as described and exemplified above for the first embodiment.

The concentration of component (B) is sufficient to cure (cross-link) the silicone resin of component (A). When component (D) is (D)(i), the concentration of component (B) is such that the ratio of the number of moles of silicon-bonded hydrogen atoms in component (B) to the sum of the number of moles of silicon-bonded alkenyl groups in component (A) and component (D)(i) is typically from 0.4 to 2, alternatively from 0.8 to 1.5, alternatively from 0.9 to 1.1. Furthermore, when component (D) is (D)(ii), the concentration of component (B) is such that the ratio of the sum of the number of moles of silicon-bonded hydrogen atoms in component (B) and component (D)(ii) to the number of moles of silicon-bonded alkenyl groups in component (A) is typically from 0.4 to 2, alternatively from 0.8 to 1.5, alternatively from 0.9 to 1.1.

Component (D) is a silicone rubber having a formula selected from (i) R¹R²₂SiO(R²₂SiO)ₐSiR²₂R¹ (IV) and (ii) R⁵R¹₂SiO(R¹R⁵SiO)_{b} SiR¹₂ R⁵ (V); wherein R¹ is C₁ to C₁₀ hydrocarbyl or C₁ to C₁₀ halogen-substituted hydrocarbyl, both free of aliphatic unsaturation, R² is R¹ or alkenyl, R⁵ is R¹ or -H, and subscripts a and b each have a value of from 1 to 4, provided the silicone rubber (D)(i) has an average of at least two silicon-bonded alkenyl groups per molecule, and the silicone rubber (D)(ii) has an average of at least two silicon-bonded hydrogen atoms per molecule.

Component (D)(i) is at least one silicone rubber having the formula R¹R²₂SiO(R²₂SiO)ₐSiR²₂R¹ (IV), wherein R¹ and R² are as described and exemplified above and the subscript a has a value of from 1 to 4, provided the silicone rubber (D)(i) has an average of at least two silicon-bonded alkenyl groups per molecule. Alternatively, the subscript a has a value of from 2 to 4 or from 2 to 3.

Examples of silicone rubbers suitable for use as component (D)(i) include, but are not limited to, silicone rubbers having the following formulae: ViMe₂SiO(Me₂SiO)ₐSiMe₂Vi, ViMe₂SiO(Ph₂SiO)ₐSiMe₂Vi, and ViMe₂SiO(PhMeSiO)ₐ SiMe₂Vi, where Me is methyl, Ph is phenyl, Vi is vinyl, and the subscript a has a value of from 1 to 4.

Component (D)(i) can be a single silicone rubber or a mixture comprising two or more different silicone rubbers, each having the formula (IV).

Component (D)(ii) is at least one silicone rubber having the formula R⁵R¹₂SiO (R¹R⁵SiO)_{b}SiR¹₂R⁵ (V); wherein R¹ and R⁵ are as described and exemplified above, and the subscript b has a value of from 1 to 4, provided the silicone rubber (D)(ii) has an average of at least two silicon-bonded hydrogen atoms per molecule. Alternatively, the subscript b has a value of from 2 to 4 or from 2 to 3.

Examples of silicone rubbers suitable for use as component (D)(ii) include, but are not limited to, silicone rubbers having the following formulae:
HMe₂SiO(Me₂SiO)_{b}SiMe₂H, HMe₂SiO(Ph₂SiO)_{b}SiMe₂H, HMe₂SiO(PhMeSiO)_{b} SiMe₂H, and HMe₂SiO(Ph₂SiO)₂(Me₂SiO)₂SiMe₂H, where Me is methyl, Ph is phenyl,
and the subscript b has a value of from 1 to 4.

Component (D)(ii) can be a single silicone rubber or a mixture comprising two or more different silicone rubbers, each having the formula (V).

The mole ratio of silicon-bonded alkenyl groups or silicon-bonded hydrogen atoms in the silicone rubber (D) to silicon-bonded alkenyl groups in the silicone resin (A) is typically from 0.01 to 0.5, alternatively from 0.05 to 0.4, alternatively from 0.1 to 0.3.

Methods of preparing silicone rubbers containing silicon-bonded alkenyl groups or silicon-bonded hydrogen atoms are well known in the art; many of these compounds are commercially available.

According to a fourth embodiment, the hydrosilylation-curable silicone composition comprises (A') a silicone resin having the formula (R¹R⁵₂SiO_{1/2})_{w}(R⁵₂SiO_{2/2})ₓ (R⁵SiO_{3/2})_{y}(SiO_{4/2})_{z} (III); (B') an organosilicon compound having an average of at least two silicon-bonded alkenyl groups per molecule in an amount sufficient to cure the silicone resin; (C) a catalytic amount of a photoactivated hydrosilylation catalyst; and (D) a silicone rubber having a formula selected from (i) R¹R²₂SiO(R²₂SiO)ₐSiR²₂R¹ (IV) and (ii) R⁵R¹₂SiO(R¹R⁵SiO)_{b} SiR¹₂R⁵ (V); wherein R¹ is C₁ to C₁₀ hydrocarbyl or C₁ to C₁₀ halogen-substituted hydrocarbyl, both free of aliphatic unsaturation, R² is R¹ or alkenyl, R⁵ is R¹ or -H, subscripts a an b each have a value of from 1 to 4, w is from 0 to 0.8, x is from 0 to 0.6, y is from 0 to 0.99, z is from 0 to 0.35, w+x+y+z=1, y+z/(w+x+y+z) is from 0.2 to 0.99, and w+x/(wr+x+y+z) is from 0.01 to 0.8, provided the silicone resin and the silicone rubber (D)(ii) each have an average of at least two silicon-bonded hydrogen atoms per molecule, the silicone rubber (D)(i) has an average of at least two silicon-bonded alkenyl groups per molecule, and the mole ratio of silicon-bonded alkenyl groups or silicon-bonded hydrogen atoms in the silicone rubber (D) to silicon-bonded hydrogen atoms in the silicone resin (A') is from 0.01 to 0.5.

Components (A'), (B'), and (C) of the fourth embodiment of the silicone composition are as described and exemplified above for the second embodiment, and component (D) of the fourth embodiment is as described and exemplified above for the third embodiment.

The concentration of component (B') is sufficient to cure (cross-link) the silicone resin of component (A'). When component (D) is (D)(i), the concentration of component (B') is such that the ratio of the sum of the number of moles of silicon-bonded alkenyl groups in component (B') and component (D)(i) to the number of moles of silicon-bonded hydrogen atoms in component (A') is typically from 0.4 to 2, alternatively from 0.8 to 1.5, alternatively from 0.9 to 1.1. Furthermore, when component (D) is (D)(ii), the concentration of component (B') is such that the ratio of the number of moles of silicon-bonded alkenyl groups in component (B') to the sum of the number of moles of silicon-bonded hydrogen atoms in component (A') and component (D)(ii) is typically from 0.4 to 2, alternatively from 0.8 to 1.5, alternatively from 0.9 to 1.1.

The mole ratio of silicon-bonded alkenyl groups or silicon-bonded hydrogen atoms in the silicone rubber (D) to silicon-bonded hydrogen atoms in the silicone resin (A') is typically from 0.01 to 0.5, alternatively from 0.05 to 0.4, alternatively from 0.1 to 0.3.

According to a fifth embodiment, the hydrosilylation-curable silicone composition comprises (A") a rubber-modified silicone resin prepared by reacting a silicone resin having the formula (R¹R²₂SiO_{1/2})_{w}(R²₂SiO_{2/2})ₓ(R¹SiO_{3/2})_{y}(SiO_{4/2})_{z} (I) and a silicone rubber having the formula R⁵R¹₂SiO(R¹R⁵SiO)_{c}SiR¹₂R⁵ (VI) in the presence of a hydrosilylation catalyst and, optionally, an organic solvent to form a soluble reaction product, wherein R¹ is C₁ to C₁₀ hydrocarbyl or C₁ to C₁₀ halogen-substituted hydrocarbyl, both free of aliphatic unsaturation, R² is R¹ or alkenyl, R⁵ is R¹ or -H, c has a value of from greater than 4 to 1,000, w is from 0 to 0.8, x is from 0 to 0.6, y is from 0 to 0.99, z is from 0 to 0.35, w+x+y+z=1, y+z/(w+x+y+z) is from 0.2 to 0.99, and w+x/(w+x+y+z) is from 0.01 to 0.8, provided the silicone resin (I) has an average of at least two silicon-bonded alkenyl groups per molecule, the silicone rubber (VI) has an average of at least two silicon-bonded hydrogen atoms per molecule, and the mole ratio of silicon-bonded hydrogen atoms in the silicone rubber (VI) to silicon-bonded alkenyl groups in silicone resin (I) is from 0.01 to 0.5; (B) an organosilicon compound having an average of at least two silicon-bonded hydrogen atoms per molecule in an amount sufficient to cure the rubber-modified silicone resin; and (C) a catalytic amount of a photoactivated hydrosilylation catalyst.

Components (B) and (C) of the fifth embodiment of the silicone composition are as described and exemplified above for the first embodiment.

The concentration of component (B) is sufficient to cure (cross-link) the rubber-modified silicone resin. The concentration of component (B) is such that the ratio of the sum of the number of moles of silicon-bonded hydrogen atoms in component (B) and the silicone rubber (VI) to the number of moles of silicon-bonded alkenyl groups in the silicone resin (I) is typically from 0.4 to 2, alternatively from 0.8 to 1.5, alternatively from 0.9 to 1.1.

Component (A") is a rubber-modified silicone resin prepared by reacting at least one silicone resin having the formula (R¹R²₂SiO_{1/2})_{w}(R²₂SiO_{2/2})ₓ(R¹ SiO_{3/2})_{y}(SiO_{4/2})_{z} (I) and at least one silicone rubber having the formula R⁵R¹₂SiO(R¹R⁵SiO)_{c}SiR¹₂R⁵ (VI) in the presence of a hydrosilylation catalyst and, optionally, an organic solvent to form a soluble reaction product, wherein R¹, R², R⁵, w, x, y, z, y+z/(w+x+y+z), and w+x/(w+x+y+z) are as described and exemplified above, and the subscript c has a value of from greater than 4 to 1,000.

The silicone resin having the formula (I) is as described and exemplified above for the first embodiment of the silicone composition. Also, the hydrosilylation catalyst and organic solvent are as described and exemplified above in the method of preparing the organohydrogenpolysiloxane resin having the formula **(II).** As used herein the term "soluble reaction product" means when organic solvent is present, the product of the reaction for preparing component (A") is miscible in the organic solvent and does not form a precipitate or suspension.

In the formula (VI) of the silicone rubber, R¹ and R⁵ are as described and exemplified above, and the subscript c typically has a value of from greater than 4 to 1,000, alternatively from 10 to 500, alternatively from 10 to 50.

Examples of silicone rubbers having the formula (VI) include, but are not limited to, silicone rubbers having the following formulae:
HMe₂SiO(Me₂SiO)₅₀SiMe₂H, HMe₂SiO(Me₂SiO)₁₀SiMe₂H, HMe₂SiO(PhMeSiO)₂₅ SiMe₂H, and Me₃SiO(MeHSiO)₁₀SiMe₃, wherein Me is methyl, Ph is phenyl, and the numerical subscripts indicate the number of each type of siloxane unit.

The silicone rubber having the formula (VI) can be a single silicone rubber or a mixture comprising two or more different silicone rubbers, each having the formula (VI).

Methods of preparing silicone rubbers containing silicon-bonded hydrogen atoms are well known in the art; many of these compounds are commercially available.

The silicone resin (I), silicone rubber (VI), hydrosilylation catalyst, and organic solvent can be combined in any order. Typically, the silicone resin, silicone rubber, and organic solvent are combined before the introduction of the hydrosilylation catalyst.

The reaction is typically carried out at a temperature of from room temperature (~23 ± 2 °C) to 150 °C, alternatively from room temperature to 100 °C.

The reaction time depends on several factors, including the structures of the silicone resin and the silicone rubber, and the temperature. The components are typically allowed to react for a period of time sufficient to complete the hydrosilylation reaction. This means the components are typically allowed to react until at least 95 mol%, alternatively at least 98 mol%, alternatively at least 99 mol%, of the silicon-bonded hydrogen atoms originally present in the silicone rubber have been consumed in the hydrosilylation reaction, as determined by FTIR spectrometry. The time of reaction is typically from 0.5 to 24 h at a temperature of from room temperature (~23 ± 2 °C) to 100 °C. The optimum reaction time can be determined by routine experimentation using the methods set forth in the Examples section below.

The mole ratio of silicon-bonded hydrogen atoms in the silicone rubber (VI) to silicon-bonded alkenyl groups in the silicone resin (I) is typically from 0.01 to 0.5, alternatively from 0.05 to 0.4, alternatively from 0.1 to 0.3.

The concentration of the hydrosilylation catalyst is sufficient to catalyze the addition reaction of the silicone resin (I) with the silicone rubber (VI). Typically, the concentration of the hydrosilylation catalyst is sufficient to provide from 0.1 to 1000 ppm of a platinum group metal, based on the combined weight of the resin and the rubber.

The concentration of the organic solvent is typically from 0 to 95% (w/w), alternatively from 10 to 75% (w/w), alternatively from 40 to 60% (w/w), based on the total weight of the reaction mixture.

The rubber-modified silicone resin can be used without isolation or purification in the fifth embodiment of the hydrosilylation-curable silicone composition or, the resin can be separated from most of the solvent by conventional methods of evaporation. For example, the reaction mixture can be heated under reduced pressure. Moreover, when the hydrosilylation catalyst is a supported catalyst, described above, the rubber-modified silicone resin can be readily separated from the hydrosilylation catalyst by filtering the reaction mixture.

According to a sixth embodiment, the hydrosilylation-curable silicone composition comprises (A"') a rubber-modified silicone resin prepared by reacting a silicone resin having the formula (R¹R⁵_{Z}SiO_{1/2})_{w}(R⁵₂SiO_{2/2})ₓ(R⁵SiO_{3/2})_{y}(SiO_{4/2})_{z} (III) and a silicone rubber having the formula R¹R²₂SiO(R²₂SiO)_{d}SiR²₂R¹ (VII) in the presence of a hydrosilylation catalyst and, optionally, an organic solvent to form a soluble reaction product, wherein R¹ is C₁ to C₁₀ hydrocarbyl or C ₁ to C ₁₀ halogen-substituted hydrocarbyl, both free of aliphatic unsaturation, R² is R¹ or alkenyl, R⁵ is R¹ or -H, subscript d has a value of from greater than 4 to 1,000, w is from 0 to 0.8, x is from 0 to 0.6, y is from 0 to 0.99, z is from 0 to 0.35, w+x+y+z=1, y+z/(w+x+y+z) is from 0.2 to 0.99, and w+x/(w+x+y+z) is from 0.01 to 0.8, provided the silicone resin (III) has an average of at least two silicon-bonded hydrogen atoms per molecule, the silicone rubber (VII) has an average of at least two silicon-bonded alkenyl groups per molecule, and the mole ratio of silicon-bonded alkenyl groups in the silicone rubber (VII) to silicon-bonded hydrogen atoms in the silicone resin (III) is from 0.01 to 0.5; (B') an organosilicon compound having an average of at least two silicon-bonded alkenyl groups per molecule in an amount sufficient to cure the rubber-modified silicone resin; and (C) a catalytic amount of a photoactivated hydrosilylation catalyst.

Components (B') and (C) of the sixth embodiment of the silicone composition are as described and exemplified above for the second embodiment.

The concentration of component (B') is sufficient to cure (cross-link) the rubber-modified silicone resin. The concentration of component (B') is such that the ratio of the sum of the number of moles of silicon-bonded alkenyl groups in component (B') and the silicone rubber (VII) to the number of moles of silicon-bonded hydrogen atoms in the silicone resin (III) is typically from 0.4 to 2, alternatively from 0.8 to 1.5, alternatively from 0.9 to 1.1.

Component (A"') is a rubber-modified silicone resin prepared by reacting at least one silicone resin having the formula (R¹R⁵₂SiO_{1/2})_{w}(R⁵₂SiO_{2/2})ₓ(R⁵SiO_{3/2})_{y}(SiO_{4/2})_{z} (III) and at least one silicone rubber having the formula R¹R²₂SiO(R²₂SiO)_{d}SiR²₂R¹ (VII) in the presence of a hydrosilylation catalyst and an organic solvent to form a soluble reaction product, wherein R¹, R², R⁵, w, x, y, z, y+z/(w+x+y+z), and w+x/(w+x+y+z) are as described and exemplified above, and the subscript d has a value of from greater than 4 to 1,000.

The silicone resin having the formula (III) is as described and exemplified above for the second embodiment of the hydrosilylation-curable silicone composition. Also, the hydrosilylation catalyst and organic solvent are as described and exemplified above in the method of preparing the organohydrogenpolysiloxane resin having the formula (II). As in the previous embodiment of the silicone composition, the term "soluble reaction product" means when organic solvent is present, the product of the reaction for preparing component (A"') is miscible in the organic solvent and does not form a precipitate or suspension.

In the formula (VII) of the silicone rubber, R¹ and R² are as described and exemplified above, and the subscript d typically has a value of from 4 to 1,000, alternatively from 10 to 500, alternatively form 10 to 50.

Examples of silicone rubbers having the formula (VII) include, but are not limited to silicone rubbers having the following formulae,:
ViMe₂SiO(Me₂SiO)₅₀SiMe₂Vi, ViMe₂SiO(Me₂SiO)₁₀SiMe₂Vi, ViMe₂SiO(PhMeSiO)₂₅ SiMe₂Vi, and Vi₂MeSiO(PhMeSiO)₂₅SiMe₂Vi, wherein Me is methyl, Ph is phenyl, Vi is vinyl, and the numerical subscripts indicate the number or each type of siloxane unit.

The silicone rubber having the formula (VII) can be a single silicone rubber or a mixture comprising two or more different silicone rubbers, each having the formula (VII).

Methods of preparing silicone rubbers containing silicon-bonded alkenyl groups are well known in the art; many of these compounds are commercially available.

The reaction for preparing component (A"') can be carried out in the manner described above for preparing component (A") of the fifth embodiment of the silicone composition, except the silicone resin having the formula (I) and the silicone rubber having the formula (VI) are replaced with the resin having the formula (III) and the rubber having the formula (VII), respectively. The mole ratio of silicon-bonded alkenyl groups in the silicone rubber (VII) to silicon-bonded hydrogen atoms in the silicone resin (III) is from 0.01 to 0.5, alternatively from 0.05 to 0.4, alternatively from 0.1 to 0.3. Moreover, the silicone resin and the silicone rubber are typically allowed to react for a period of time sufficient to complete the hydrosilylation reaction. This means the components are typically allowed to react until at least 95 mol%, alternatively at least 98 mol%, alternatively at least 99 mol%, of the silicon-bonded alkenyl groups originally present in the rubber have been consumed in the hydrosilylation reaction, as determined by FTIR spectrometry.

The hydrosilylation-curable silicone composition of the present method can comprise additional ingredients, provided the ingredient does not prevent the silicone resin of the nanomaterial-filled silicone composition from curing to form a silicone resin film having low coefficient of thermal expansion, high tensile strength, and high modulus, as described below. Examples of additional ingredients include, but are not limited to, hydrosilylation catalyst inhibitors, such as 3-methyl-3-penten-1-yne, 3,5-dimethyl-3-hexen-1-yne, 3,5-dimethyl-1-hexyn-3-ol, 1-ethynyl-1-cyclohexanol, 2-phenyl-3-butyn-2-ol, vinylcyclosiloxanes, and triphenylphosphine; adhesion promoters, such as the adhesion promoters taught in U.S. Patent Nos. 4,087,585 and 5,194,649; dyes; pigments; anti-oxidants; heat stabilizers; UV stabilizers; flame retardants; flow control additives; and diluents, such as organic solvents and reactive diluents.

For example, the hydrosilylation-curable silicone composition can contain (E) a reactive diluent comprising (i) an organosiloxane having an average of at least two silicon-bonded alkenyl groups per molecule and a viscosity of from 0.001 to 2 Pa·s at 25 °C, wherein the viscosity of (E)(i) is not greater than 20% of the viscosity of the silicone resin, e.g., component (A), (A'), (A"), or (A"') above, of the silicone composition and the organosiloxane has the formula (R¹R²₂SiO_{1/2})ₘ(R²₂SiO_{2/2})ₙ(R¹SiO_{3/2})ₚ(SiO_{4/2})_{q}, wherein R¹is C₁ to C₁₀ hydrocarbyl or C ₁ to C₁₀ halogen-substituted hydrocarbyl, both free of aliphatic unsaturation, R² is R¹ or alkenyl, m is 0 to 0.8, n = 0 to 1, p = 0 to 0.25, q = 0 to 0.2, m+n+p+q=1, and m+n is not equal to 0, provided when p+q=0, n is not equal to 0 and the alkenyl groups are not all terminal, and (ii) an organohydrogensiloxane having an average of at least two silicon-bonded hydrogen atoms per molecule and a viscosity of from 0.001 to 2 Pa·s at 25 °C, in an amount sufficient to provide from 0.5 to 3 moles of silicon-bonded hydrogen atoms in (E)(ii) per mole of alkenyl groups in (E)(i), wherein the organohydrogensiloxane has the formula (HR¹₂SiO_{1/2})ₛSiO_{3/2})ₜ(SiO_{4/2})ᵥ, wherein R¹ is C ₁ to C ₁₀ hydrocarbyl or C ₁ to C ₁₀ halogen-substituted hydrocarbyl, both free of aliphatic unsaturation, s is from 0.25 to 0.8, t is from 0 to 0.5, v is from 0 to 0.3, s+t+v=1, and t+v is not equal to 0.

Component (E)(i) is at least one organosiloxane having an average of at least two alkenyl groups per molecule and a viscosity of from 0.001 to 2 Pa·s at 25 °C, wherein the viscosity of (E)(i) is not greater than 20% of the viscosity of the silicone resin of the silicone composition and the organosiloxane has the formula (R¹R²₂SiO_{1/2})ₘ (R²₂SiO_{2/2})ₙ(R¹SiO_{3/2})ₚ(SiO_{4/2})_{q}, wherein R¹ is C₁ to C₁₀ hydrocarbyl or C₁ to C₁₀ halogen-substituted hydrocarbyl, both free of aliphatic unsaturation, R² is R¹ or alkenyl, m is 0 to 0.8, n = 0 to 1, p = 0 to 0.25, q = 0 to 0.2, m+n+p+q=1, and m+n is not equal to 0, provided when p+q=0, n is not equal to 0 and the alkenyl groups are not all terminal (i.e., not all the alkenyl groups in the organosiloxane are in the R¹R²₂SiO_{1/2} units). Further, organosiloxane (E)(i) can have a linear, branched, or cyclic structure. For example, when the subscipts m, p, and q in the formula of organosiloxane (E)(i) are each equal to 0, the organosiloxane is an organocyclosiloxane.

The viscosity of organosiloxane (E)(i) at 25 °C is typically from 0.001 to 2 Pa·s, alternatively from 0.001 to 0.1 Pa·s, alternatively from 0.001 to 0.05 Pa·s. Further, the viscosity of organosiloxane (E)(i) at 25°C is typically not greater than 20%, alternatively not greater than 10%, alternatively not greater than 1%, of the viscosity of the silicone resin in the hydrosilylation-curable silicone composition.

Examples of organosiloxanes suitable for use as organosiloxane (E)(i) include, but are not limited to, organosiloxanes having the following formulae:
(ViMeSiO)₃, (ViMeSiO)₄, (ViMeSiO)₅, (ViMeSiO)₆, (ViPhSiO)₃, (ViPhSiO)₄, (ViPhSiO)₅, (ViPhSiO)₆, ViMe₂SiO(ViMeSiO)ₙSiMe₂Vi, Me₃SiO(ViMeSiO)ₙSiMe₃, and
(ViMe₂SiO)₄Si, where Me is methyl, Ph is phenyl, Vi is vinyl, and the subscript n has a value such that the organosiloxane has a viscosity of from 0.001 to 2 Pa·s at 25 °C.

Component (E)(i) can be a single organosiloxane or a mixture comprising two or more different organosiloxanes, each as described above. Methods of making alkenyl-functional organosiloxanes are well known in the art.

Component (E)(ii) is at least one organohydrogensiloxane having an average of at least two silicon-bonded hydrogen atoms per molecule and a viscosity of from 0.001 to 2 Pa·s at 25°C, in an amount sufficient to provide from 0.5 to 3 moles of silicon-bonded hydrogen atoms in (E)(ii) to moles of alkenyl groups in (E)(i), wherein the organohydrogensiloxane has the formula (HR¹2SiO_{1/2})ₛ(R¹SiO_{3/2})ₜ(SiO_{4/2})ᵥ, wherein R¹is C₁ to C₁₀ hydrocarbyl or C₁ to C₁₀ halogen-substituted hydrocarbyl, both free of aliphatic unsaturation, s is from 0.25 to 0.8, t is from 0 to 0.5, v is from 0 to 0.3, s+t+v=1, and t+v is not equal to 0.

The viscosity of organohydrogensiloxane (E)(ii) at 25 °C is typically from 0.001 to 2 Pa·s, alternatively from 0.001 to 0.1 Pa·s, alternatively from 0.001 to 0.05 Pa·s

Examples of organohydrogensiloxanes suitable for use as organohydrogensiloxane (E)(ii) include, but are not limited to, organohydrogensiloxanes having the following formulae:
PhSi(OSiMe₂H)₃, Si(OSiMe₂H)4, MeSi(OSiMe₂H)₃, (HMe₂SiO)₃SiOSi(OSiMe₂H)₃, and
(HMe₂SiO)₃SiOSi(Ph)(OSiMe₂H)₂, where Me is methyl and Ph is phenyl.

Component (E)(ii) can be a single organohydrogensiloxane or a mixture comprising two or more different organohydrogensiloxanes, each as described above. Methods of making organohydrogensiloxanes are well known in the art.

The concentration of component (E)(ii) is sufficient to provide from 0.5 to 3 moles of silicon-bonded hydrogen atoms, alternatively from 0.6 to 2 moles of silicon-bonded hydrogen atoms, alternatively from 0.9 to 1.5 moles of silicon-bonded hydrogen atoms, per mole of alkenyl groups in component (E)(i).

The concentration of the reactive diluent (E), components (E)(i) and (E)(ii) combined, in the hydrosilylation-curable silicone composition is typically from 0 to 90% (w/w), alternatively from 0 to 50% (w/w), alternatively from 0 to 20% (w/w), alternatively from 0 to 10% (w/w), based on the combined weight of the silicone resin, component (A), (A'),(A"), or (A"'), and the organosilicon compound, component (B) or (B') in the embodiments above.

The carbon nanomaterial of the nanomaterial-filled silicone composition can be any carbon material having at least one physical dimension (e.g., particle diameter, fiber diameter, layer thickness) less than about 200 nm. Examples of carbon nanomaterials include, but are not limited to, carbon nanoparticles having three dimensions less than about 200 nm, such as quantum dots, hollow spheres, and fullerenes; fibrous carbon nanomaterials having two dimensions less than about 200 nm, such as nanotubes (e.g., single-walled nanotubes and multi-walled nanotubes) and nanofibers (e.g., axially aligned, platelet, and herringbone or fishbone nanofibers); and layered carbon nanomaterials having one dimension less than about 200 nm, such as carbon nanoplatelets (e.g., exfoliated graphite and graphene sheet). The carbon nanomaterial can be electrically conductive or semiconductive.

The carbon nanomaterial can also be an oxidized carbon nanomaterial, prepared by treating the aforementioned carbon nanomaterials with an oxidizing acid or mixture of acids at elevated temperature. For example, the carbon nanomaterial can be oxidized by heating the material in a mixture of concentrated nitric and concentrated sulfuric acid (1:3 v/v, 25 mL/g carbon) at a temperature of from 40 to 150°C for 1-3 hours.

The carbon nanomaterial can be a single carbon nanomaterial or a mixture comprising at least two different carbon nanomaterials, each as described above.

The concentration of the carbon nanomaterial is typically from 0.0001 to 99% (w/w), alternatively from 0.001 to 50% (w/w), alternatively from 0.01 to 25% (w/w), alternatively from 0.1 to 10% (w/w), alternatively from 1 to 5% (w/w), based on the total weight of the nanomaterial-filled silicone composition.

Methods of preparing carbon nanomaterials are well-known in the art. For example, carbon nanoparticles (e.g., fullerenes) and fibrous carbon nanomaterials (e.g., nanotubes, and nanofibers) can be prepared using at least one of the following methods: arc discharge, laser ablation, and catalytic chemical vapor deposition. In the arc discharge process, an arc discharge between two graphite rods produces, depending on the gas atmosphere, single-walled nanotubes, multi-walled nanotubes, and fullerenes. In the laser ablation method, a graphite target loaded with a metal catalyst is irradiated with a laser in a tube furnace to produce single- and multi-walled nanotubes. In the catalytic chemical vapor deposition method, a carbon-containing gas or gas mixture is introduced into a tube furnace containing a metal catalyst at a temperature of from 500 to 1000 °C (and different pressures) to produce carbon nanotubes and nanofibers. Carbon nanoplatelets can be prepared by the intercalation and exfoliation of graphite.

The nanomaterial-filled silicone composition can be a one-part composition containing the silicone resin, organosilicon compound, photoactivated hydrosilylation catalyst, and carbon nanomaterial in a single part or, alternatively, a multi-part composition comprising these components in two or more parts.

The one-part nanomaterial-filled silicone composition is typically prepared by combining the components of the hydrosilylaltion-curable silicone composition, the carbon nanomaterial, and any optional ingredients in the stated proportions at ambient temperature, with or without the aid of an organic solvent. Although the order of addition of the various components is not critical if the silicone composition is to be used immediately, the hydrosilylation catalyst is preferably added last at a temperature below about 30 °C to prevent premature curing of the composition. Also, the multi-part nanomaterial-filled silicone composition can be prepared by combining the components in each part.

Mixing can be accomplished by any of the techniques known in the art such as milling, blending, and stirring, either in a batch or continuous process. The particular device is determined by the viscosity of the components and the viscosity of the final silicone composition.

A method of preparing a silicone resin film according to the present invention comprises the steps of:
coating a release liner with a nanomaterial-filled silicone composition, wherein the silicone composition comprises:
   a hydrosilylation-curable silicone composition comprising a silicone resin having an average of at least two silicon-bonded alkenyl groups or silicon-bonded hydrogen atoms per molecule and a photoactivated hydrosilylation catalyst, and
   a carbon nanomaterial; and
   exposing the coating to radiation having a wavelength of from 150 to 800 nm at a dosage sufficient to cure the silicone resin.

In the first step of the method of preparing a silicone resin film, a release liner is coated with a nanomaterial-filled silicone composition, wherein the nanomaterial-filled silicone composition is as described and exemplified above.

The release liner can be any rigid or flexible material having a surface from which the silicone resin film can be removed without damage by delamination after the silicone resin is cured, as described below. Examples of release liners include, but are not limited to, silicon, quartz; fused quartz; aluminum oxide; ceramics; glass; metal foils; polyolefins such as polyethylene, polypropylene, polystyrene, and polyethyleneterephthalate; fluorocarbon polymers such as polytetrafluoroethylene and polyvinylfluoride; polyamides such as Nylon; polyimides; polyesters such as poly(methyl methacrylate); epoxy resins; polyethers; polycarbonates; polysulfones; and polyether sulfones. The release liner can also be a material, as exemplified above, having a surface treated with a release agent, such as a silicone release agent.

The release liner can be coated with the nanomaterial-filled silicone composition using conventional coating techniques, such as spin coating, dipping, spraying, brushing, or screen-printing. The amount of silicone composition is sufficient to form a cured silicone resin film having a thickness of from 1 to 500 µm in the second step of the method, described below.

In the second step of the method of preparing a silicone resin film, the coating on the release liner is exposed to radiation typically having a wavelength of from 150 to 800 nm, alternatively from 250 to 400 nm, at a dosage sufficient to cure (cross-link) the silicone resin. The light source is typically a medium pressure mercury-arc lamp. The dose of radiation is typically from 10 to 20,000 mJ/cm², alternatively from 100 to 2,000 mJ/cm².

The method can further comprise the step of separating the silicone resin film from the release liner. The silicone resin film can be separated from the release liner by mechanically peeling the film away from the release liner.

The method of the present invention can further comprise forming a coating on at least a portion of the silicone resin film. Examples of coatings include, but are not limited to, cured silicone resins prepared by curing hydrosilylation-curable silicone resins or condensation-curable silicone resins; cured silicone resins prepared by curing sols of organosilsesquioxane resins; inorganic oxides, such as indium tin oxide, silicon dioxide, and titanium dioxide; inorganic nitrides, such as silicon nitride and gallium nitride; metals, such as copper, silver, gold, nickel, and chromium; and silicon, such as amorphous silicon, microcrystalline silicon, and polycrystalline silicon.

The silicone resin film of the present invention typically has a thickness of from 1 to 500 µm, alternatively from 15 to 500 µm, alternatively from 15 to 300 µm, alternatively from 20 to 150 µm, alternatively from 30 to 125 µm.

The silicone resin film typically has a flexibility such that the film can be bent over a cylindrical steel mandrel having a diameter less than or equal to 3.2 mm without cracking, where the flexibility is determined as described in ASTM Standard D522-93a, Method B.

The silicone resin film has low coefficient of linear thermal expansion (CTE), high tensile strength, and high modulus. For example the film typically has a CTE of from 0 to 80 µm/m°C, alternatively from 0 to 20 µm/m°C, alternatively from 2 to 10 µm/m°C, at temperature of from room temperature (∼23 ± 2 °C) to 200°C. Also, the film typically has a tensile strength at 25°C of from 5 to 200 MPa, alternatively from 20 to 200 MPa, alternatively from 50 to 200 MPa. Further, the silicone resin film typically has a Young's modulus at 25°C of from 0.5 to 10 GPa, alternatively from 1 to 6 GPa, alternatively from 3 to 5 GPa.

The transparency of the silicone resin film depends on a number of factors, such as the composition of the cured silicone resin, the thickness of the film, and the type and concentration of the carbon nanomaterial. The silicone resin film typically has a transparency (% transmittance) of at least 50%, alternatively at least 60%, alternatively at least 75%, alternatively at least 85%, in the visible region of the electromagnetic spectrum.

The silicone resin film of the present invention has low coefficient of thermal expansion, high tensile strength, and high modulus compared to a silicone resin film prepared from the same silicone composition absent the carbon nanomaterial. Also, although the filled (i.e., carbon nanomaterial-containing) and unfilled silicone resin films have comparable glass transition temperatures, the former film typically exhibits a smaller change in modulus in the temperature range corresponding to the glass transition.

The silicone resin film of the present invention is useful in applications requiring films having high thermal stability, flexibility, mechanical strength, and transparency. For example, the silicone resin film can be used as an integral component of flexible displays, solar cells, flexible electronic boards, touch screens, fire-resistant wallpaper, and impact-resistant windows. The film is also a suitable substrate for transparent or nontransparent electrodes.

### EXAMPLES

The following examples are presented to better illustrate the nanomaterial-filled silicone composition, method, and silicone resin film of the present invention, but are not to be considered as limiting the invention, which is delineated in the appended claims. Unless otherwise noted, all parts and percentages reported in the examples are by weight. The following methods and materials were employed in the examples:

### Measurement of Mechanical Properties

Young's modulus, tensile strength, and tensile strain at break were measured using an MTS Alliance RT/5 testing frame, equipped with a 100-N load cell. Young's modulus, tensile strength, and tensile strain were determined at room temperature (∼23 ± 2 °C) for the test specimens of Examples 4 and 5.

The test specimen was loaded into two pneumatic grips spaced apart 25 mm and pulled at a crosshead speed of 1 mm/min. Load and displacement data were continuously collected. The steepest slope in the initial section of the load-displacement curve was taken as the Young's modulus. Reported values for Young's modulus (GPa), tensile strength (MPa), and tensile strain (%) each represent the average of three measurements made on different dumbbell-shaped test specimens from the same reinforced silicone resin film.

The highest point on the load-displacement curve was used to calculate the tensile strength according to the equation:
σ = F/(wb),
where:
σ = tensile strength, MPa,
F = highest force, N,
w = width of the test specimen, mm, and
b = thickness of the test specimen, mm.

The tensile strain at break was approximated by dividing the difference in grip separation before and after testing by the initial separation according to the equation:
*ε = 100(1₂ - 1₁)*/*1₁,*
where:
ε = tensile strain at break, %,
1₂ = final separation of the grips, mm, and
*l₁* = initial separation of the grips, mm.

Coated Nylon films were irradiated using a Colite UV System (Colite International, Ltd.) equipped with a 300-W bulb.

WN1500 Vacuum Bagging Film, sold by Airtech, Inc. (Huntington Beach, CA), is a nylon bagging film having a thickness of 50 µm.

Pyrograf^{®}-III grade HHT-19 carbon nanofiber, sold by Pyrograf Products, Inc. (Cedarville, Ohio), is a heat-treated (up to 3000 °C) carbon nanofiber having a diameter of 100 to 200 nm and a length of 30,000 to 100,000 nm.

Silicone Base A: a mixture containing 82% of a silicone resin having the formula (PhSiO_{3/2})_{0.75}(ViMe₂SiO_{1/2})_{0.25}, where the resin has a weight-average molecular weight of about 1700, a number-average molecular weight of about 1440, and contains about 1 mol% of silicon-bonded hydroxy groups; and 18% of 1,4-bis(dimethylsilyl)benzene. The mole ratio of silicon-bonded hydrogen atoms in the 1,4-bis(dimethylsilyl)benzene to silicon-bonded vinyl groups in the silicone resin is 1.1:1, as determined by ²⁹SiNMR and ¹³CNMR.

Silicone Base B: a mixture containing 76% of a silicone resin having the formula (PhSiO_{3/2})_{0.75}(ViMe₂SiO_{1/2})_{0.25}, where the resin has a weight-average molecular weight of about 1700, a number-average molecular weight of about 1440, and contains about 1 mol% of silicon-bonded hydroxy groups; 9.5% of phenyltris(dimethylsiloxy)silane; and 14.5% of 1,1,5,5-tetramethyl-3,3-diphenyltrisiloxane. The mole ratios of silicon-bonded hydrogen atoms in the phenyltris(dimethylsiloxy)silane to silicon-bonded vinyl groups in the Silicone Resin, and silicon-bonded hydrogen atoms in the 1,1,5,5-tetramethyl-3,3-diphenyltrisiloxane to silicon-bonded vinyl groups are each 0.55:1, as determined by 29_{SiNMR} and ¹³CNMR.

### Example 1

This example demonstrates the preparation of a chemically oxidized carbon nanofiber. Pyrograf^{®}-III carbon nanofiber (2.0 g), 12.5 mL of concentrated nitric acid, and 37.5 mL of concentrated sulfuric acid were combined sequentially in a 500-mL three-neck flask equipped with a condenser, thermometer, Teflon-coated magnetic stirring bar, and a temperature controller. The mixture was heated to 80°C and kept at this temperature for 3 h. The mixture was then cooled by placing the flask on a layer of dry ice in a one gallon pail. The mixture was poured into a Buchner funnel containing a nylon membrane (0.8 µm) and the carbon nanofibers were collected by vacuum filtration. The nanofibers remaining on the membrane were washed several times with deionized water until the pH of the filtrate was equal to the pH of the wash water. After the last wash, the carbon nanofibers were kept in the funnel for an additional 15 min. with continued application of the vacuum. Then the nanofibers, supported on the filter membrane, were placed in an oven at 100°C for 1 h. The carbon nanofibers were removed from filter membrane and stored in a dry sealed glass jar.

### Example 2

The oxidized carbon nanofiber of Example 1 (0.028 g) was mixed with Silicone Base A (10.04 g) in a glass vial, followed by the addition of 3.0 g of heptane. The vial was placed in an ultrasonic bath for 210 min. The mixture was then subjected to centrifugation at 1500 rpm for 30 min. The supernatant was transferred to a clean vial and kept under vacuum (45 mm Hg) at 50°C for 90 min. to remove most of the heptane.

### Example 3

The oxidized carbon nanofiber of Example 1 (0.12 g) was mixed with Silicone Base B (11.06 g) in a glass vial, followed by the addition of 3.0 g of heptane. The vial was placed in an ultrasonic bath for 210 min. The mixture was then subjected to centrifugation at 1500 rpm for 30 min. The supernatant was transferred to a clean vial and kept under vacuum (45 mm Hg) at 50°C for 90 min. to remove most of the heptane.

### Example 4

The silicone composition of Example 2 (5.0 g) was mixed with 0.075 g of a catalyst consisting of 1% (w/w) platinum(II) acetylacetonate in ethyl lactate. The resulting composition (0.5 g) was applied to the surface of WN1500 Vacuum Bagging Film (8 in. x 12 in.) using a bound wire draw coating bar. The coating was exposed to radiation having a wavelength of 365 nm at a dosage of approximately 12000 mJ/m². The silicone resin film was separated from the Bagging Film. The silicone resin film had a uniform thickness (0.03-0.05 mm) and was substantially transparent and free of voids. The mechanical properties of the silicone resin film are shown in Table 1.

### Example 5

A silicone resin film was prepared according to the method of Example 4, except the silicone composition of Example 3 was substituted for the silicone composition of Example 2. The mechanical properties of the silicone resin film are shown in Table 1.

**Table 1**

| Ex. | Thickness (mm) | Tensile Strength (MPa) | Young's Modulus (MPa) | Tensile Strain at Break (%) |
|---|---|---|---|---|
| 4 | 0.04-0.05 | - | 358.9 ± 8.2 | - |
| 5 | 0.04 | 7.7 ± 1.8 | 476.2 ± 28.2 | 2.7 ± 1.7 |

| | | | | |
|---|---|---|---|---|
| - Denotes value not measured | | | | |

## Claims

1. A nanomaterial-filled silicone composition, comprising:
a hydrosilylation-curable silicone composition comprising a silicone resin having an average of at least two silicon-bonded alkenyl groups or silicon-bonded hydrogen atoms per molecule, and a photoactivated hydrosilylation catalyst; and
a carbon nanomaterial.

2. The nanomaterial-filled silicone composition according to claim 1, wherein the hydrosilylation-curable silicone composition comprises (A) a silicone resin having the formula (R¹R²₂SiO1/2)_{w}(R²₂SiO_{2/2})ₓ(R¹SiO_{3/2})_{y}(SiO_{4/2})_{z} (I), wherein R¹is C₁ to C₁₀ hydrocarbyl or C₁ to C₁₀ halogen-substituted hydrocarbyl, both free of aliphatic unsaturation, R² is R¹ or alkenyl, w is from 0 to 0.8, x is from 0 to 0.6, y is from 0 to 0.99, z is from 0 to 0.35, w+x+y+z=1, y+z/(w+x+y+z) is from 0.2 to 0.99, and w+x/(w+x+y+z) is from 0.01 to 0.8, provided the silicone resin has an average of at least two silicon-bonded alkenyl groups per molecule; (B) an organosilicon compound having an average of at least two silicon-bonded hydrogen atoms per molecule in an amount sufficient to cure the silicone resin; and (C) a catalytic amount of a photoactivated hydrosilylation catalyst.

3. The nanomaterial-filled silicone composition according to claim 1, wherein the hydrosilylation-curable silicone composition comprises (A') a silicone resin having the formula (R¹R⁵₂SiO_{1/2})_{w}(R⁵₂SiO_{2/2})ₓ(R⁵SiO_{3/2})_{y}(SiO_{4/2})_{z} (III), wherein R¹is C₁ to C₁₀ hydrocarbyl or C ₁ to C ₁₀ halogen-substituted hydrocarbyl, both free of aliphatic unsaturation, R⁵ is R¹ or-H, w is from 0 to 0.8, x is from 0 to 0.6, y is from 0 to 0.99, z is from 0 to 0.35, w+x+y+z=1, y+z/(w+x+y+z) is from 0.2 to 0.99, and w+x/(w+x+y+z) is from 0.01 to 0.8, provided the silicone resin has an average of at least two silicon-bonded hydrogen atoms per molecule; (B') an organosilicon compound having an average of at least two silicon-bonded alkenyl groups per molecule in an amount sufficient to cure the silicone resin; and (C) a catalytic amount of a photoactivated hydrosilylation catalyst.

4. The nanomaterial-filled silicone composition according to claim 1, wherein the hydrosilylation-curable silicone composition comprises (A) a silicone resin having the formula (R¹R²₂SiO_{1/2})_{w}(R²₂SiO_{2/2})ₓ(R¹SiO_{3/2})_{y}(SiO_{4/2})_{z} (I); (B) an organosilicon compound having an average of at least two silicon-bonded hydrogen atoms per molecule in an amount sufficient to cure the silicone resin; (C) a catalytic amount of a photoactivated hydrosilylation catalyst; and (D) a silicone rubber having a formula selected from (i) R¹R²₂SiO(R²₂SiO)ₐ SiR²₂R¹ (IV) and (ii) R⁵R¹₂SiO(R¹R⁵SiO)_{b}SiR¹₂R⁵ (V); wherein R¹ is C₁ to C₁₀ hydrocarbyl or C ₁ to C₁₀ halogen-substituted hydrocarbyl, both free of aliphatic unsaturation, R² is R¹ or alkenyl, R⁵ is R¹ or -H, subscripts a and b each have a value of from 1 to 4, w is from 0 to 0.8, x is from 0 to 0.6, y is from 0 to 0.99, z is from 0 to 0.35, w+x+y+z=1, y+z/(w+x+y+z) is from 0.2 to 0.99, and w+x/(w+x+y+z) is from 0.01 to 0.8, provided the silicone resin and the silicone rubber (D)(i) each have an average of at least two silicon-bonded alkenyl groups per molecule, the silicone rubber (D)(ii) has an average of at least two silicon-bonded hydrogen atoms per molecule, and the mole ratio of silicon-bonded alkenyl groups or silicon-bonded hydrogen atoms in the silicone rubber (D) to silicon-bonded alkenyl groups in the silicone resin (A) is from 0.01 to 0.5.

5. The nanomaterial-filled silicone composition according to claim 1, wherein the hydrosilylation-curable silicone composition comprises (A') a silicone resin having the formula (R¹R⁵₂SiO_{1/2})_{w}(R⁵₂SiO_{2/2})ₓ(R⁵SiO_{3/2})_{y}(SiO_{4/2})_{z} (III); (B') an organosilicon compound having an average of at least two silicon-bonded alkenyl groups per molecule in an amount sufficient to cure the silicone resin; (C) a catalytic amount of a photoactivated hydrosilylation catalyst; and (D) a silicone rubber having a formula selected from (i) R¹R²₂SiO(R²₂SiO)ₐ SiR²₂R¹ (IV) and (ii) R⁵R¹₂SiO(R¹R⁵SiO)_{b}SiR¹₂R⁵ (V); wherein R¹ is C₁ to C₁₀ hydrocarbyl or C₁ to C₁₀ halogen-substituted hydrocarbyl, both free of aliphatic unsaturation, R² is R¹ or alkenyl, R⁵ is R¹ or -H, subscripts a an b each have a value of from 1 to 4, w is from 0 to 0.8, x is from 0 to 0.6, y is from 0 to 0.99, z is from 0 to 0.35, w+x+y+z=1, y+z/(w+x+y+z) is from 0.2 to 0.99, and w+x/(w+x+y+z) is from 0.01 to 0.8, provided the silicone resin and the silicone rubber (D)(ii) each have an average of at least two silicon-bonded hydrogen atoms per molecule, the silicone rubber (D)(i) has an average of at least two silicon-bonded alkenyl groups per molecule, and the mole ratio of silicon-bonded alkenyl groups or silicon-bonded hydrogen atoms in the silicone rubber (D) to silicon-bonded hydrogen atoms in the silicone resin (A') is from 0.01 to 0.5.

6. The nanomaterial-filled silicone composition according to claim 1, wherein the hydrosilylation-curable silicone composition comprises (A") a rubber-modified silicone resin prepared by reacting a silicone resin having the formula (R¹R²₂SiO_{1/2})_{w}(R²₂SiO_{2/2})ₓ (R¹SiO_{3/2})_{y}(SiO_{4/2})_{z} (I) and a silicone rubber having the formula R⁵R¹₂SiO(R¹R⁵SiO)_{c} SiR¹₂R⁵ (VI) in the presence of a hydrosilylation catalyst and, optionally, an organic solvent to form a soluble reaction product, wherein R¹ is C₁ to C₁₀ hydrocarbyl or C₁ to C₁₀ halogen-substituted hydrocarbyl, both free of aliphatic unsaturation, R² is R¹ or alkenyl, R⁵ is R¹ or -H, subscript c has a value of from greater than 4 to 1,000, w is from 0 to 0.8, x is from 0 to 0.6, y is from 0 to 0.99, z is from 0 to 0.35, w+x+y+z=1, y+z/(w+x+y+z) is from 0.2 to 0.99, and w+x/(w+x+y+z) is from 0.01 to 0.8, provided the silicone resin (I) has an average of at least two silicon-bonded alkenyl groups per molecule, the silicone rubber (VI) has an average of at least two silicon-bonded hydrogen atoms per molecule, and the mole ratio of silicon-bonded hydrogen atoms in the silicone rubber (VI) to silicon-bonded alkenyl groups in silicone resin (I) is from 0.01 to 0.5; (B) an organosilicon compound having an average of at least two silicon-bonded hydrogen atoms per molecule in an amount sufficient to cure the rubber-modified silicone resin; and (C) a catalytic amount of a photoactivated hydrosilylation catalyst.

7. The nanomaterial-filled silicone composition according to claim 1, wherein the hydrosilylation-curable silicone composition comprises (A"') a rubber-modified silicone resin prepared by reacting a silicone resin having the formula (R¹R⁵₂SiO_{1/2})_{w}(R⁵₂SiO_{2/2})ₓ (R⁵SiO_{3/2})_{y}(SiO_{4/2})_{z} (III) and a silicone rubber having the formula R¹R²₂SiO(R²₂SiO)_{d} SiR²₂R¹ (VII) in the presence of a hydrosilylation catalyst and, optionally, an organic solvent to form a soluble reaction product, wherein R¹ is C₁ to C₁₀ hydrocarbyl or C₁ to C₁₀ halogen-substituted hydrocarbyl, both free of aliphatic unsaturation, R² is R¹ or alkenyl, R⁵ is R¹ or -H, subscript d has a value of from greater than 4 to 1,000, w is from 0 to 0.8, x is from 0 to 0.6, y is from 0 to 0.99, z is from 0 to 0.35, w+x+y+z=1, y+z/(w+x+y+z) is from 0.2 to 0.99, and w+x/(w+x+y+z) is from 0.01 to 0.8, provided the silicone resin (III) has an average of at least two silicon-bonded hydrogen atoms per molecule, the silicone rubber (VII) has an average of at least two silicon-bonded alkenyl groups per molecule, and the mole ratio of silicon-bonded alkenyl groups in the silicone rubber (VII) to silicon-bonded hydrogen atoms in the silicone resin (III) is from 0.01 to 0.5; (B') an organosilicon compound having an average of at least two silicon-bonded alkenyl groups per molecule in an amount sufficient to cure the rubber-modified silicone resin; and (C) a catalytic amount of a photoactivated hydrosilylation catalyst.

8. The nanomaterial-filled silicone composition according to any of the preceding claims, wherein the hydrosilylation-curable silicone composition further comprises (E) a reactive diluent comprising (i) an organosiloxane having an average of at least two silicon-bonded alkenyl groups per molecule and a viscosity of from 0.001 to 2 Pa·s at 25 °C, wherein the viscosity of (E)(i) is not greater than 20% of the viscosity of the silicone resin of the silicone composition and the organosiloxane has the formula (R¹R²₂SiO_{1/2})ₘ(R²₂SiO_{2/2})ₙ (R¹SiO_{3/2})ₚ(SiO_{4/2})_{q}, wherein R¹is C₁ to C₁₀ hydrocarbyl or C₁ to C₁₀ halogen-substituted hydrocarbyl, both free of aliphatic unsaturation, R² is R¹ or alkenyl, m is 0 to 0.8, n = 0 to 1, p = 0 to 0.25, q = 0 to 0.2, m+n+p+q=1, and m+n is not equal to 0, provided when p+q=0, n is not equal to 0 and the alkenyl groups are not all terminal, and (ii) an organohydrogensiloxane having an average of at least two silicon-bonded hydrogen atoms per molecule and a viscosity of from 0.001 to 2 Pa·s at 25°C, in an amount sufficient to provide from 0.5 to 3 moles of silicon-bonded hydrogen atoms in (E)(ii) per mole of alkenyl groups in (E)(i), wherein the organohydrogensiloxane has the formula (HR¹₂SiO_{1/2})ₛ(R¹SiO_{3/2})ₜ(SiO_{4/2})ᵥ, wherein R¹ is C₁ to C₁₀ hydrocarbyl or C₁ to C₁₀ halogen-substituted hydrocarbyl, both free of aliphatic unsaturation, s is from 0.25 to 0.8, t is from 0 to 0.5, v is from 0 to 0.3, s+t+v=1, and t+v is not equal to 0.

9. The nanomaterial-filled silicone composition according to claims 2, 4, or 6, wherein the organosilicon compound of component (B) is an organohydrogenpolysiloxane resin having he formula (R¹R⁴₂SiO_{1/2})_{w}(R⁴₂SiO_{2/2})ₓ(R¹SiO_{3/2})_{y}(SiO_{4/2})_{z} (II), wherein R¹ is C₁ to C₁₀ hydrocarbyl or C₁ to C₁₀ halogen-substituted hydrocarbyl, both free of aliphatic unsaturation, R⁴ is R¹ or an organosilylalkyl group having at least one silicon-bonded hydrogen atom, w is from 0 to 0.8, x is from 0 to 0.6, y is from 0 to 0.99, z is from 0 to 0.35, w+x+y+z=1, y+z/(w+x+y+z) is from 0.2 to 0.99, and w+x/(w+x+y+z) is from 0.01 to 0.8, provided at least 50 mol% of the groups R⁴ are organosilylalkyl.

10. The nanomaterial-filled silicone composition according to claim 1, wherein the carbon nanomaterial is selected from carbon nanoparticles, fibrous carbon nanomaterials, and layered carbon nanomaterials.

11. The nanomaterial-filled silicone composition according to claim 1, wherein the concentration of the carbon nanomaterial is from 0.001 to 50% (w/w), based on the total weight of the nanomaterial-filled silicone composition.

12. A method of preparing a silicone resin film, the method comprising the steps of:
coating a release liner with a nanomaterial-filled silicone composition, wherein the silicone composition comprises:
a hydrosilylation-curable silicone composition comprising a silicone resin having an average of at least two silicon-bonded alkenyl groups or silicon-bonded hydrogen atoms per molecule and a photoactivated hydrosilylation catalyst, and
a carbon nanomaterial; and
exposing the coating to radiation having a wavelength of from 150 to 800 nm at a dosage sufficient to cure the silicone resin.

13. The method according to claim 12, wherein the carbon nanomaterial is selected from carbon nanoparticles, fibrous carbon nanomaterials, and layered carbon nanomaterials.

14. The method according to claim 12, wherein the concentration of the carbon nanomaterial is from 0.001 to 50% (w/w), based on the total weight of the nanomaterial-filled silicone composition.

15. The method according to claim 12, further comprising forming a coating on at least a portion of the silicone resin film.

16. The method according to claim 15, wherein the coating is a cured silicone resin.

17. A silicone resin film prepared according to the methods of claims 12 or 14.

## Patentansprüche

1. Mit Nanomaterial befüllte Silikon-Zusammensetzung, umfassend:
eine Hydrosilylierungs-härtbare Silikon-Zusammensetzung umfassend ein Silikonharz mit einem Durchschnitt von zumindest zwei Silizium-gebundenen Alkenylgruppen oder Silizium-gebundenen Wasserstoffatomen pro Molekül, und einen photoaktivierten Hydrosilylierungskatalysator; und
ein Kohlenstoff-Nanomaterial.

2. Mit Nanomaterial befüllte Silikon-Zusammensetzung nach Anspruch 1, wobei die Hydrosilylierungs-härtbare Silikon-Zusammensetzung (A) ein Silikon-Harz, das die Formel (R¹R²₂SiO_{1/2})_{w}(R²₂SiO_{2/2})ₓ(R¹SiO_{3/2})_{y}(SiO_{4/2})_{z} (I) aufweist, wobei R¹ C₁ bis C₁₀ Hydrocarbyl oder C₁ bis C₁₀ Halogen-substituiertes Hydrocarbyl ist, beide frei von aliphatischer Ungesättigtheit, R²R¹ oder Alkenyl ist, w von 0 bis 0,8 ist, x von 0 bis 0,6 ist, y von 0 bis 0,99 ist, z von 0 bis 0,35 ist, w+x+y+z=1 ist, y+z/(w+x+y+z) von 0,2 bis 0.99 ist und w+x/(w+x+y+z) von 0,01 bis 0,8 ist, vorausgesetzt, dass das Silikon-Harz einen Durchschnitt von zumindest zwei Silizium-gebundenen Alkenylgruppen pro Molekül aufweist; (B) eine Organosilizium-Verbindung mit einem Durchschnitt von zumindest Silizium-gebundenen Wasserstoffatomen pro Molekül in einer Menge die ausreichend ist, um das Silikon-Harz zu härten; und (C) eine katalytische Menge eines photoaktivierten Hydrosilylierungs-Katalysators umfasst.

3. Mit Nanomaterial befüllte Silikon-Zusammensetzung nach Anspruch 1, wobei die Hydrosilylierungs-härtbare Silikon-Zusammensetzung (A') ein Silikon-Harz mit der Formel (R¹R⁵₂SiO_{1/2})_{w}(R⁵₂SiO_{2/2})ₓ(R⁵SiO_{3/2})_{y}(SiO_{4/2})_{z} (III) umfasst, wobei R¹ C₁ bis C₁₀ Hydrocarbyl oder C₁ bis C₁₀ Halogen-sustituiertes Hydrocarbyl ist, beide frei von einer aliphatischen Ungesättigtheit, R⁵ R¹ oder -H ist, w von 0 bis 0.8 ist, x von 0 bis 0,6 ist, y von 0 bis 0,99 ist, z von 0 bis 0,35 ist, w+x+y+z=1, y+z/(w+x+y+z) von 0,2 bis 0,99 ist und w+x/(w+x+y+z) von 0,01 bis 0,8 ist, vorausgesetzt, dass das Silikonharz einen Durchschnitt von zumindest zwei Silizium-gebundenen WasserstoffAtomen pro Molekül aufweist; (B') eine Organosilizium-Verbindung mit einem Durchschnitt von zumindest zwei Silizium-gebundenen Alkenylgruppen pro Molekül in einer Menge ist, die ausreichend ist, um das Silikon-Harz zu härten; und (C) eine katalytische Menge eines photoaktivierten Hydrosilylierungs-Katalysators umfasst.

4. Mit Nanomaterial befüllte Silikonzusammensetzung nach Anspruch 1, wobei die Hydrosilylierungs-härtbare Silikonzusammensetzung (A) ein Silikon-Harz mit der Formel (R¹R²₂SiO_{1/2})_{w}(R²₂SiO_{2/2})ₓ(R¹SiO_{3/2})_{y}(SiO_{4/2})_{z} (I) umfasst; (B) eine Organosilizium-Verbindung mit einem Durchschnitt von zumindest zwei Silizium-gebundenen Wasserstoffatomen pro Molekül, in einer Menge, die ausreichend zum Härten des Silikon-Harzes ist; (C) eine katalytische Menge eines photoaktivierten Hydrosilylierungs-Katalysators; und (D) einen Silikonkautschuk mit einer Formel umfasst, ausgewählt aus (i) R¹ R²₂SiO(R²₂SiO)ₐ SiR²₂R¹ (IV) und (ii) R⁵R¹₂SiO(R¹R⁵SiO)_{b}SiR¹₂R⁵ (V) umfasst, wobei R1 C₁ bis C₁₀ Hydrocarbyl oder C₁ bis C₁₀ Halogen-substituiertes Hydrocarbyl ist, beide frei von einer aliphatischen Ungesättigtheit, R² R¹ oder Alkenyl ist, R⁵ R¹ oder -H ist, die Subskripte a und b jeweils einen Wert von 1 bis 4 aufweisen, w von 0 bis 0,8 ist, x von 0 bis 0,6 ist, y von 0 bis 0,99 ist, z von 0 bis 0,35 ist, w+x+y+z=1 ist, y+z/(w+x+y+z) von 0,2 bis 0,99 ist, und w+x/(w+x+y+z) von 0,01 bis 0,8 ist, vorausgesetzt, dass das Silikon-Harz und der Silikonkautschuk (D) (i) jeweils einen Durchschnitt von zumindest zwei Silizium-gebundenen Alkenylgruppen pro Molekül aufweist, wobei der Silikonkautschuk (D) (ii) einen Durchschnitt von zumindest zwei Silizium-gebundenen Wasserstoffatomen pro Molekül aufweist und das Molverhältnis von Silizium-gebundenen Alkenylgruppen oder Silizium-gebundenen Wasserstoffatomen im Silikonkautschuk (D) zu Silizium-gebundenen Alkenylgruppen im Silikon-Harz (A) von 0,01 bis 0,5 beträgt.

5. Mit Nanomaterial befüllte Silikon-Zusammensetzung nach Anspruch 1, wobei die Hydrosilylierungs-härtbare Silikon-Zusammensetzung (A') ein Silikon-Harz mit der Formel (R¹R⁵₂SiO_{1/2})_{w}(R⁵₂SiO_{2/2})ₓ(R⁵SiO_{3/2})_{y}(SiO_{4/2})_{z} (III); (B') eine Organosilizium-Verbindung mit einem Durchschnitt von zumindest zwei Silizium-gebundenen Alkenylgruppen pro Molekül in einer Menge, die ausreichend zum Härten des Silikonharzes ist; (C) eine katalytische Menge eines photoaktivierten Hydrosilylierungs-Katalysators; und (D) ein Silikonkautschuk mit einer Formel umfasst, ausgewählt aus (i) R¹R²₂SiO(R²₂SiO)ₐSiR²₂R¹ (IV) und (ii)R⁵R¹₂SiO(R¹R⁵SiO)_{b}SiR¹₂R⁵ (V) und wobei R¹ C₁ bis C₁₀ Hydrocarbyl oder C₁ bis C₁₀ Halogen-substituiertes Hydrocarbyl ist, beide frei von einer aliphatischen Ungesättigtheit, R² R¹ oder Alkenyl ist, R⁵ R¹ oder -H ist, die Subskripte a und b jeweils einen Wert von 1 bis 4 aufweisen, w von 0 bis 0,8 ist, x von 0 bis 0,6 ist, y von 0 bis 0,99 ist, z von 0 bis 0,35 ist, w+x+y+z=1 ist, y+z/(w+x+y+z) von 0,2 bis 0,99 ist, und w+x/(w+x+y+z) von 0,01 bis 0,8 ist, vorausgesetzt, dass das Silikon-Harz und der Silikonkautschuk (D) (ii) jeweils einen Durchschnitt von zumindest zwei Silizium-gebundenen Wasserstoffatomen pro Molekül aufweisen, wobei der Silikonkautschuk (D) (i) einen Durchschnitt von zumindest zwei Silizium-gebundenen Alkenylgruppen pro Molekül aufweist und wobei das Molverhältnis von Silizium-gebundenen Alkenylgruppen oder Silizium-gebundenen Wasserstoffatomen im Silikonkautschuk (D) zu Silizium-gebundenen Wasserstoffatomen im Silikon-Harz (A') von 0,01 bis 0,5 beträgt.

6. Mit Nanomaterial befüllte Silikon-Zusammensetzung nach Anspruch 1, wobei die Hydrosilylierungs-härtbare Silikon-Zusammensetzung (A") ein Kautschukmodifiziertes Silikon-Harz, hergestellt durch Umsetzung eines Silikon-Harzes mit der Formel (R¹R²₂SiO_{1/2})_{w}R²₂SiO_{2/2})ₓ(R¹SiO_{3/2})_{y}(Si_{4/2})_{z} (I) und eines Silikonkautschuks mit der Formel R⁵R¹₂SiO(R¹R⁵SiO)_{c}SiR¹₂R⁵ (VI) in Gegenwart eines Hydrosilylierungs-Katalysators und wahlweise eines organischen Lösungsmittels zur Bildung eines löslichen Reaktionsprodukten umfasst, wobei R¹ C₁ bis C₁₀ Hydrocarbyl oder C₁ bis C₁₀ Halogen-substituiertes Hydrocarbyl ist, beide frei von einer aliphatischen Ungesättigtheit, R² R¹ oder Alkenyl ist, R⁵ R¹ oder -H ist, Subskript c einen Wert von mehr als 4 bis 1.000 aufweist, w von 0 bis 0,8 ist, x von 0 bis 0,6 ist, y von 0 bis 0,99 ist, z von 0 bis 0,35 ist, w+x+y+z=1 , y+z/(w+x+y+z) von 0,2 bis 0,99 ist, und w+x/(w+x+y+z) von 0,1 bis 0,8 ist, vorausgesetzt, dass das Silikon-Harz (I) einen Durchschnitt von zumindest zwei Silizium-gebundenen Alkenylgruppen pro Molekül aufweist, der Siliziumkautschuk (VI) einen Durchschnitt von zumindest zwei Silizium-gebundenen Wasserstoffatomen pro Molekül aufweist und das Molverhältnis von Silizium-gebundenen Wasserstoffatomen im Silikonkautschuk (VI) zu den Silizium-gebundenen Alkenylgruppen im Silikonharz (I) von 0,01 bis 0,5 ist; (B) eine Organosilizium-Verbindung mit einem Durchschnitt von zumindest zwei Silizium-gebundenen Wasserstoffatomen pro Molekül in einer Menge, die ausreichend ist, um das Kautschuk-modifizierte Silikon-Harz zu härten; und (C) eine katalytische Menge eines photoaktivierten Hydrolisierungskatalysators umfasst.

7. Mit Nanomaterial befüllte Silikon-Zusammensetzung nach Anspruch 1, wobei die Hydrosilylierungs-härtbare Silikon-Zusammensetzung (A"') ein Kautschukmodifiziertes Silikon-Harz, hergestellt durch Umsetzen eines Silikon-Harzes mit der Formel (R¹R⁵₂SiO_{1/2})_{w}(R⁵₂SiO_{2/2})ₓ(R⁵SiO_{3/2})_{y}(SiO_{4/2})_{z} (III) und eines Silikonkautschuks mit der Formel R¹R²₂SiO(R²₂SiO)_{d}SiR²₂R¹ (VII) in Gegenwart eines Hydrosilylierungskatalysators, und wahlweise eines organischen Lösungsmittels, zur Bildung eines löslichen Reaktionsproduktes, wobei R¹ C₁ bis C₁₀ Hydrocarbyl oder C₁ bis C₁₀ Halogen-substituiertes Hydrocarbyl ist, beide frei von einer aliphatischen Ungesättigtheit, R² R¹ oder Alkenyl ist, R⁵ R¹ oder -H ist, Subskript d einen Wert von mehr als 4 bis 1.000 aufweist, w von 0 bis 0,8 ist, x von 0 bis 0,6 ist, y von 0 bis 0,99 ist, z von 0 bis 0,35 ist, w-x+y+z-1, y+z/(w+x+y+z) von 0,2 bis 0,99 ist und w+x/(w+x+y+z) von 0,01 bis 0,8 ist, vorausgesetzt, dass das Silikon-Harz (III) einen Durschnitt von zumindest zwei Silizium-gebundenen Wasserstoffatomen pro Molekül aufweist, der Silikonkautschuk (VII) einen Durchschnitt von zumindest zwei Silizium-gebundenen Alkenylgruppen pro Molekül aufweist, und das Molverhältnis von Silizium-gebundenen Alkenylgruppen im Silikonkautschuk (VII) zu Silizium-gebundenen Wasserstoffatomen im Silikon-Harz (III) von 0,01 bis 0,5 ist; (B') eine Organosilizium-Verbindung mit durchschnittlich zumindest zwei Silizium-gebundenen Alkenylgruppen pro Molekül in einer Menge, die ausreichend ist, um das Kautschuk-modifizierte Silikon-Harz zu härten; und (C) eine katalytische Menge eines photoaktivierten Hydrosilylierungskatalysators umfasst.

8. Mit Nanomaterial befüllte Silikon-Zusammensetzung nach einem der vorhergehenden Ansprüche, wobei die Hydrosilylierungs-härtbare Silikon-Zusammensetzung weiter (i) ein reaktives Verdünnungsmittel umfasst, umfassend (i) ein Organo-Siloxan mit einem Durchschnitt von zumindest zwei Silizium-gebundenen Alkenylgruppen pro Molekül und einer Viskosität von 0,001 bis 2 Pa·s bei 25 °C, wobei die Viskosität von (E)(i) nicht mehr als 20% der Viskosität des Silikon-Harzes der Silikon-Zusammensetzung beträgt und das Organo-Siloxan die Formel (R¹R²₂SiO_{1/2})ₘ(R²₂SiO_{2/2})ₙ(R¹SiO_{3/2})ₚ(SiO_{4/2})_{q} aufweist, wobei R¹ C₁ bis C₁₀ Hydrocarbyl oder C₁ bis C₁₀ Halogen-substituiertes Hydrocarbyl ist, beide frei von einer aliphatischen Ungesättigtheit, R² R¹ oder Alkenyl ist, m 0 bis 0,8 ist, n 0 bis 1 ist, p 0 bis 0,25 ist, q 0 bis 0,2 ist, m+n+p+q=1 ist, und m+n nicht gleich 0 ist, vorausgesetzt, dass wenn p+q=0, dann n nicht gleich 0 ist und die Alkenylgruppen nicht alle terminal sind, und (ii) ein Organo-Hydrogen-Siloxan mit einem Durchschnitt von zumindest zwei Silizium-gebundenen Wasserstoffatomen pro Molekül und einer Viskosität von 0,001 bis 2 Pa·s bei 25°C, in einer Menge, die ausreichend ist, um 0,5 bis 3 Mol Silizium-gebundene Wasserstoffatome in (E) (ii) pro Mol Alkenylgruppen in (E) (ii) bereitzustellen, wobei das Organo-Hydrogen-Siloxan die Formel (HR¹₂SiO_{1/2})ₛ(R¹SiO_{3/2})ₜSiO_{4/2})ᵥ aufweist, wobei R¹ C₁ bis C₁₀ Hydrocarbyl oder C₁ bis C₁₀ Halogen-substituiertes Hydrocarbyl ist, beide frei von einer aliphatischen Ungesättigtheit, s von 0,25 bis 0,8 beträgt, t von 0 bis 0,5 beträgt, v von 0 bis 0,3 beträgt, s+t+v=1 und t+v nicht gleich 0 ist.

9. Mit Nanomaterial befüllte Silikon-Zusammensetzung nach Ansprüchen 2, 4 oder 6 wobei die Organosilizium-Verbindung von Bestandteil (B) ein Organohydrogen-Polysiloxan-Harz mit der Formel (R¹R⁴₂SiO_{1/2})_{w}(R⁴₂SiO_{2/2})ₓ(R¹SiO_{3/2})_{y}(SiO_{4/2})_{z} (II) ist, wobei R¹ C₁ bis C₁₀ Hydrocarbyl oder C₁ bis C₁₀ Halogen-substituiertes Hydrocarbyl ist, beide frei von einer aliphatischen Ungesättigtheit, R⁴ R¹ oder eine Organo-Silylalkylgruppe mit zumindest einem Silizium-gebundenen Wasserstoffatom ist, w von 0 bis 0,8 ist, x von 0 bis 0,6 ist, y von 0 bis 0,99 ist, z von 0 bis 0,35 ist, w+x+y+z-1, y+z/(w+x+y+z) von 0,2 bis 0,99 ist, und w+x/(w+x+y+z) von 0,01 bis 0,8 ist, vorausgesetzt, dass zumindest 50 mol% der Gruppen R⁴ Organo-Silylalkyl sind.

10. Mit Nanomaterial befüllte Silikon-Zusammensetzung nach Anspruch 1, wobei das Kohlenstoff-Nanomaterial aus Kohlenstoff-Nanopartikeln, faserartigen Kohlenstoff-Nanomaterialen und geschichteten Kohlenstoff-Nanomaterialien ausgewählt ist.

11. Mit Nanomaterial befüllte Silikon-Zusammensetzung nach Anspruch 1, wobei die Konzentration des Kohlenstoff-Nanomaterials von 0,001 bis 50 % (G/G) basierend auf dem Gesamtgewicht der Nanomaterial-befüllten Silikon-Zusammensetzung beträgt.

12. Verfahren zur Herstellung eines Silikon-Harzfilms, wobei das Verfahren die folgenden Schritte umfasst:
Beschichten einer Trennschicht mit einer Nanomaterial-befüllten Silikon-Zusammensetzung, wobei die Silikon-Zusammensetzung Folgendes umfasst:
eine Hydrosilylierungs-härtbare Silikon-Zusammensetzung, umfassend ein Silikon-Harz mit einem Durchschnitt von zumindest zwei Silizium-gebundenen Alkenylgruppen oder Silizium-gebundenen Wasserstoffatomen pro Molekül und ein photoaktivierter Hydrosilylierungskatalysator, und
ein Kohlenstoffnanomaterial; und
Exponieren der Beschichtung gegenüber einer Bestrahlung mit einer Wellenlänge von 150 bis 800 nm in einer Dosis ausreichend, um das Silikon-Harz zu härten.

13. Verfahren nach Anspruch 12, wobei das Kohlenstoff-Nanomaterial aus Kohlenstoff-Nanopartikeln, faserartigen Kohlenstoff-Nanomaterialien und geschichteten Kohlenstoff-Nanomaterialien ausgewählt ist.

14. Verfahren nach Anspruch 12, wobei die Konzentration des Kohlenstoff-Nanomaterials von 0,001 bis 50 % (G/G) basierend auf dem Gesamtgewicht der Nanomaterial-befüllten Silikon-Zusammensetzung beträgt.

15. Verfahren nach Anspruch 12, das weiterhin das Ausbilden einer Beschichtung auf zumindest einem Anteil des Silikon-Harzfilms umfasst.

16. Verfahren nach Anspruch 15, wobei die Beschichtung ein gehärtetes Silikon-Harz ist.

17. Silikon-Harzfilm, der nach einem der Verfahren der Ansprüche 12 oder 14 hergestellt worden ist.

## Revendications

1. Composition de silicone chargée d'un nanomatériau, comprenant :
une composition de silicone durcissable par hydrosilylation comprenant une résine de silicone ayant en moyenne au moins deux groupes alcényle liés au silicium ou atomes d'hydrogène liés au silicium par molécule, et un catalyseur d'hydrosilylation photoactivé ; et
un nanomatériau carboné.

2. Composition de silicone chargée d'un nanomatériau selon la revendication 1, dans laquelle la composition de silicone durcissable par hydrosilylation comprend (A) une résine de silicone de formule (R¹R²₂SiO_{1/2})_{w}(R²₂SiO_{2/2})ₓ(R¹SiO_{3/2})_{y}(SiO_{4/2})_{z} (1), dans laquelle R¹ est un hydrocarbyle en C₁ à C₁₀ ou un halogénohydrocarbyle en C₁ à C₁₀, les deux exempts d'insaturation aliphatique, R² est R¹ ou un alcényle, w vaut de 0 à 0,8, x vaut de 0 à 0,6, y vaut de 0 à 0,99, z vaut de 0 à 0,35, w+x+y+z = 1, y+z/(w+x+y+z) vaut de 0,2 à 0,99, et w+x/(w+x+y+z) vaut de 0,01 à 0,8, sous réserve que la résine de silicone ait en moyenne au moins deux groupes alcényle liés au silicium par molécule ; (B) un composé organique du silicium ayant en moyenne au moins deux atomes d'hydrogène liés au silicium par molécule, en une quantité suffisante pour durcir la résine de silicone ; et (C) une quantité catalytique d'un catalyseur d'hydrosilylation photoactivé.

3. Composition de silicone chargée d'un nanomatériau selon la revendication 1, dans laquelle la composition de silicone durcissable par hydrosilylation comprend (A') une résine de silicone de formule (R¹R⁵₂SiO_{1/2})_{w}(R⁵₂SiO_{2/2})ₓ(R⁵SiO_{3/2})_{y}(SiO_{4/2})_{z} (III), dans laquelle R¹ est un hydrocarbyle en C₁ à C₁₀ ou un halogénohydrocarbyle en C₁ à C₁₀, les deux exempts d'insaturation aliphatique, R⁵ est R¹ ou -H, w vaut de 0 à 0,8, x vaut de 0 à 0,6, y vaut de 0 à 0,99, z vaut de 0 à 0,35, w+x+y+z = 1, y+z/(w+x+y+z) vaut de 0,2 à 0,99, et w+x/(w+x+y+z) vaut de 0,01 à 0,8, sous réserve que la résine de silicone ait en moyenne au moins deux atomes d'hydrogène liés au silicium par molécule ; (B') un composé organique du silicium ayant en moyenne au moins deux groupes alcényle liés au silicium par molécule, en une quantité suffisante pour durcir la résine de silicone ; et (C) une quantité catalytique d'un catalyseur d'hydrosilylation photoactivé.

4. Composition de silicone chargée d'un nanomatériau selon la revendication 1, dans laquelle la composition de silicone durcissable par hydrosilylation comprend (A) une résine de silicone de formule (R¹R²₂SiO_{1/2})_{w}(R²₂SiO_{2/2})ₓ(R¹SiO_{3/2})_{y}(SiO_{4/2})_{z} (1) ; (B) un composé organique du silicium ayant en moyenne au moins deux atomes d'hydrogène liés au silicium par molécule, en une quantité suffisante pour durcir la résine de silicone ; (C) une quantité catalytique d'un catalyseur d'hydrosilylation photoactivé ; et (D) un caoutchouc de silicone de formule choisie parmi (i) R¹R²₂SiO(R²₂SiO)ₐSiR²₂R¹ (IV) et (ii) R⁵R¹₂SiO(R¹R⁵SiO)_{b}SiR¹₂R⁵ (V) ; où R¹ est un hydrocarbyle en C₁ à C₁₀ ou un halogénohydrocarbyle en C₁ à C₁₀, les deux exempts d'insaturation aliphatique, R² est R¹ ou un alcényle, R⁵ est R¹ ou -H, chacun des indices a et b vaut de 1 à 4, w vaut de 0 à 0,8, x vaut de 0 à 0,6, y vaut de 0 à 0,99, z vaut de 0 à 0,35, w+x+y+z = 1, y+z/(w+x+y+z) vaut de 0,2 à 0,99, et w+x/(w+x+y+z) vaut de 0,01 à 0,8, sous réserve que chacun parmi la résine de silicone et le caoutchouc de silicone (D)(i) ait en moyenne au moins deux groupes alcényle liés au silicium par molécule, le caoutchouc siliconé (D)(ii) ait en moyenne au moins deux atomes d'hydrogène liés au silicium par molécule, et le rapport molaire des groupes alcényle liés au silicium ou des atomes d'hydrogène liés au silicium dans le caoutchouc siliconé (D) aux groupes alcényle liés au silicium dans la résine de silicone (A) soit de 0,01 à 0,5.

5. Composition de silicone chargée d'un nanomatériau selon la revendication 1, dans laquelle la composition de silicone durcissable par hydrosilylation comprend (A') une résine de silicone de formule (R¹R⁵₂SiO_{1/2})_{w}(R⁵₂SiO_{2/2})ₓ(R⁵SiO_{3/2})_{y}(SiO_{4/2})_{z} (III) ; (B') un composé organique du silicium ayant en moyenne au moins deux groupes alcényle liés au silicium par molécule, en une quantité suffisante pour durcir la résine de silicone ; (C) une quantité catalytique d'un catalyseur d'hydrosilylation photoactivé ; et (D) un caoutchouc de silicone de formule choisie parmi (i) R¹R²₂SiO(R²₂SiO)ₐSiR²₂R¹ (IV) et (ii) R⁵R¹₂SiO(R¹R⁵SiO)_{b}SiR¹₂R⁵ (V) ; où R¹ est un hydrocarbyle en C₁ à C₁₀ ou un halogénohydrocarbyle en C₁ à C₁₀, les deux exempts d'insaturation aliphatique, R² est R¹ ou un alcényle, R⁵ est R¹ ou -H, chacun des indices a et b vaut de 1 à 4, w vaut de 0 à 0,8, x vaut de 0 à 0,6, y vaut de 0 à 0,99, z vaut de 0 à 0,35, w+x+y+z = 1, y+z/(w+x+y+z) vaut de 0,2 à 0,99, et w+x/(w+x+y+z) vaut de 0,01 à 0,8, sous réserve que chacun parmi la résine de silicone et le caoutchouc de silicone (D)(ii) ait en moyenne au moins deux atomes d'hydrogène liés au silicium par molécule, le caoutchouc siliconé (D)(i) ait en moyenne au moins deux groupes alcényle liés au silicium par molécule, et le rapport molaire des groupes alcényle liés au silicium ou des atomes d'hydrogène liés au silicium dans le caoutchouc siliconé (D) aux atomes d'hydrogène liés au silicium dans la résine de silicone (A') soit de 0,01 à 0,5.

6. Composition de silicone chargée d'un nanomatériau selon
la revendication 1, dans laquelle la composition de silicone durcissable par hydrosilylation comprend (A") une résine de silicone modifiée par un caoutchouc, préparée par réaction d'une résine de silicone de formule (R¹R²₂SiO_{1/2})_{w}(R²₂SiO_{2/2})ₓ(R¹SiO_{3/2})_{y}(SiO_{4/2})_{z} (1) et d'un caoutchouc de silicone de formule R⁵R¹₂SiO(R¹R⁵SiO)_{c} SiR¹₂R⁵ (VI) en présence d'un catalyseur d'hydrosilylation et éventuellement d'un solvant organique pour former un produit réactionnel soluble, où R¹ est un hydrocarbyle en C₁ à C₁₀ ou un halogénohydrocarbyle en C₁ à C₁₀, les deux exempts d'insaturation aliphatique, R² est R¹ ou un alcényle, R⁵ est R¹ ou -H, l'indice c vaut de plus de 4 à 1000, w vaut de 0 à 0,8, x vaut de 0 à 0,6, y vaut de 0 à 0,99, z vaut de 0 à 0,35, w+x+y+z = 1, y+z/(w+x+y+z) vaut de 0,2 à 0,99, et w+x/(w+x+y+z) vaut de 0,01 à 0,8, sous réserve que la résine de silicone (I) ait en moyenne au moins deux groupes alcényle liés au silicium par molécule, le caoutchouc de silicone (VI) ait en moyenne au moins deux atomes d'hydrogène liés au silicium par molécule, et le rapport molaire des atomes d'hydrogène liés au silicium dans le caoutchouc de silicone (VI) aux groupes alcényle liés au silicium dans la résine de silicone (I) soit de 0,01 à 0,5 ; (B) un composé organique du silicium ayant en moyenne au moins deux atomes d'hydrogène liés au silicium par molécule, en une quantité suffisante pour durcir la résine de silicone modifiée par un caoutchouc ; et (C) une quantité catalytique d'un catalyseur d'hydrosilylation photoactivé.

7. Composition de silicone chargée d'un nanomatériau selon la revendication 1, dans laquelle la composition de silicone durcissable par hydrosilylation comprend (A"') une résine de silicone modifiée par un caoutchouc, préparée par réaction d'une résine de silicone de formule (R¹R⁵₂SiO_{1/2})_{w}(R⁵₂SiO_{2/2})ₓ(R⁵SiO_{3/2})_{y}(SiO_{4/2})_{z} (III) et d'un caoutchouc de silicone de formule R¹R²₂SiO(S²₂SiO)_{d} SiR²₂R¹ (VII) en présence d'un catalyseur d'hydrosilylation et éventuellement d'un solvant organique pour former un produit réactionnel soluble, où R¹ est un hydrocarbyle en C₁ à C₁₀ ou un halogénohydrocarbyle en C₁ à C₁₀, les deux exempts d'insaturation aliphatique, R² est R¹ ou un alcényle, R⁵ est R¹ ou -H, l'indice d vaut de plus de 4 à 1000, w vaut de 0 à 0,8, x vaut de 0 à 0,6, y vaut de 0 à 0,99, z vaut de 0 à 0,35, w+x+y+z = 1, y+z/(w+x+y+z) vaut de 0,2 à 0,99, et w+x/(w+x+y+z) vaut de 0,01 à 0,8, sous réserve que la résine de silicone (III) ait en moyenne au moins deux atomes d'hydrogène liés au silicium par molécule, le caoutchouc de silicone (VII) ait en moyenne au moins deux groupes alcényle liés au silicium par molécule, et le rapport molaire des groupes alcényle liés au silicium dans le caoutchouc de silicone (VII) aux atomes d'hydrogène liés au silicium dans la résine de silicone (III) soit de 0,01 à 0,5 ; (B') un composé organique du silicium ayant en moyenne au moins deux groupes alcényle liés au silicium par molécule, en une quantité suffisante pour durcir la résine de silicone modifiée par un caoutchouc ; et (C) une quantité catalytique d'un catalyseur d'hydrosilylation photoactivé.

8. Composition de silicone chargée d'un nanomatériau selon l'une quelconque des revendications précédentes, dans laquelle la composition de silicone durcissable par hydrosilylation comprend en outre (E) un diluant réactif comprenant (i) un organosiloxane ayant en moyenne au moins deux groupes alcényle liés au silicium par molécule et une viscosité de 0,001 à 2 Pa·s à 25°C, la viscosité de (E)(i) n'étant pas supérieure à 20 % de la viscosité de la résine de silicone de la composition de silicone, lequel organosiloxane est de formule (R¹R²₂SiO_{1/2})ₘ(R²₂SiO_{2/2})ₙ(R¹SiO_{3/2})ₚ(SiO_{4/2})_{q}, dans laquelle R¹ est un hydrocarbyle en C₁ à C₁₀ ou un halogénohydrocarbyle en C₁ à C₁₀, les deux exempts d'insaturation aliphatique, R² est R¹ ou un alcényle, m vaut de 0 à 0,8, n = 0 à 1, p = 0 à 0,25, q = 0 à 0,2, m+n+p+q = 1, et m+n est différente de zéro, sous réserve que, lorsque p+q = 0, n soit différent de 0 et les groupes alcényle ne soient pas tous terminaux, et (ii) un organohydrogénosiloxane ayant en moyenne au moins deux atomes d'hydrogène liés au silicium par molécule et une viscosité de 0,001 à 2 Pa·s à 25°C, en une quantité suffisante pour fournir de 0,5 à 3 moles d'atomes d'hydrogène liés au silicium dans (E)(ii) par mole de groupes alcényle dans (E)(i), lequel organohydrogénosiloxane est de formule (HR¹₂SiO_{1/2})ₛ (R¹SiO_{3/2})ₜ(SiO_{4/2})ᵥ dans laquelle R¹ est un hydrocarbyle en C₁ à C₁₀ ou un halogénohydrocarbyle en C₁ à C₁₀, les deux exempts d'insaturation aliphatique, s vaut de 0,25 à 0,8, t vaut de 0 à 0,5, v vaut de 0 à 0,3, s+t+v = 1, et t+v est différente de 0.

9. Composition de silicone chargée d'un nanomatériau selon la revendication 2, 4 ou 6, dans laquelle le composé organique du silicium du composant (B) est une résine d'organohydrogénopolysiloxane de formule (R¹R⁴₂SiO_{1/2})_{w}(R⁴₂SiO_{2/2})ₓ(R¹SiO_{3/2})_{y}(SiO_{4/2})_{z} (II) dans laquelle R¹ est un hydrocarbyle en C₁ à C₁₀ ou un halogénohydrocarbyle en C₁ à C₁₀, les deux exempts d'insaturation aliphatique, R⁴ est R¹ ou un groupe organosilylalkyle ayant au moins un atome d'hydrogène lié au silicium, w vaut de 0 à 0,8, x vaut de 0 à 0,6, y vaut de 0 à 0,99, z vaut de 0 à 0,35, w+x+y+z = 1, y+z/(w+x+y+z) vaut de 0,2 à 0,99, et w+x/(w+x+y+z) vaut de 0,01 à 0,8, sous réserve qu'au moins 50 % en moles des groupes R⁴ soient des groupes organosilylalkyle.

10. Composition de silicone chargée d'un nanomatériau selon la revendication 1, dans laquelle le nanomatériau carboné est choisi parmi les nanoparticules de carbone, les nanomatériaux carbonés fibreux, et les nanomatériaux carbonés stratifiés.

11. Composition de silicone chargée d'un nanomatériau selon la revendication 1, dans laquelle la concentration du nanomatériau carboné est de 0,001 à 50 % (p/p) par rapport au poids total de la composition de silicone chargée de nanomatériau.

12. Procédé pour préparer un film de résine de silicone, lequel procédé comprend les étapes consistant à :
revêtir une doublure antiadhésive avec une composition de silicone chargée de nanomatériau, la composition de silicone comprenant :
une composition de silicone durcissable par hydrosilylation comprenant une résine de silicone ayant en moyenne au moins deux groupes alcényle liés au silicium ou atomes d'hydrogène liés au silicium par molécule et un catalyseur d'hydrosilylation photoactivé, et
un nanomatériau carboné ; et
exposer le revêtement à un rayonnement ayant une longueur d'onde de 150 à 800 nm à une dose suffisante pour durcir la résine de silicone.

13. Procédé selon la revendication 12, dans lequel le nanomatériau carboné est choisi parmi les nanoparticules de carbone, les nanomatériaux carbonés fibreux, et les nanomatériaux carbonés stratifiés.

14. Procédé selon la revendication 12, dans lequel la concentration du nanomatériau carboné est de 0,001 à 50 % (p/p) par rapport au poids total de la composition de silicone chargée de nanomatériau.

15. Procédé selon la revendication 12, comprenant en outre la formation d'un revêtement sur au moins une partie du film de résine de silicone.

16. Procédé selon la revendication 15, dans lequel le revêtement est une résine de silicone durcie,

17. Film de résine de silicone préparé conformément aux procédés des revendications 12 ou 14.
